# EUROPEAN PATENT APPLICATION

(11) **EP 2 410 529 A1**
(43) Date of publication of application: **25.01.2012**
(21) Application number: 10753242.6
(22) Date of filing: 01.03.2010
(51) Int. Cl.: G11B 27/00, G11B 20/10, G11B 27/10, G11B 27/34, H04N 5/91, H04N 5/93

(54) **APPLICATION RUNNING DEVICE**

(30) Priority: 16.03.2009 JP 2009063168
(71) Applicant: Panasonic Corporation, Kadoma-shi Osaka 571-8501 (JP)
(72) Inventor: SASAKI, Chieko, Osaka-shi, Osaka 540-6207 (JP); TANAKA, Keiichi, Osaka-shi, Osaka 540-6207 (JP)
(74) Representative: Grünecker, Kinkeldey, Stockmair & Schwanhäusser
(86) International application number: PCT/JP2010/001369
(87) International publication number: WO 2010/106745

(57) **Abstract**

To provide an application life cycle management method for use in switching a movie work that is a playback target within a storage medium on which a plurality of movie works are stored, which is equivalent to one for use in replacement of BD-ROM discs. When a playback target is switched within a local storage on which a plurality of movie works are stored, a playback device, which includes an input unit for issuing a movie work switching request, performs processing with use of a user operation performed on the input unit as a trigger, instead of the medium status change between ejection and insertion. This allows application life cycle management equivalent to one in the case of BD-ROM disc replacement.

## Description

### [Technical Field]

The present invention belongs to a technical field of synchronized playback of a digital stream and an application.

### [Background Art]

Application-synchronized playback is an art of playing back a digital stream while at the same time executing a Java^{™} application in a playback device or the like for playing back videos. An application for use in application-synchronized playback is, for example, a menu program for interactively receiving user operations executed simultaneously with video playback, and a game program in which a character of a video work appears. Such an application is used for enhancement of user convenience during watching of a movie work, enhancement of popularity of a movie work, and so on. As a package media standard for realizing a single package that contains digitized video and various types of applications with use of this playback control art, there is known the BD-ROM (Blu-Ray Disc Read Only Memory) standard.

The BD-ROM standard defines an application having a life cycle called "disc-unbound", which means properties of operating across a plurality of correlated BD-ROM discs. Hereinafter, an application having this life cycle is referred to as a "disc-unbound application", and an application which cannot operate across a plurality of BD-ROM discs is referred to as a "disc-bound application".

Although a disc-bound application is permitted to operate across different titles within a single movie work, the disc-bound application is prohibited from operating across a plurality of discs. Accordingly, when a disc is ejected while the disc-bound application operates, a playback terminal terminates the disc-bound application. Since one BD-ROM disc generally contains an application and a digital stream that constitute one movie work, a life cycle "disc-bound" is used in order to prohibit operations of the same application across different movie works.

A disc-unbound application is permitted to operate across a plurality of correlated discs. Accordingly, even when a disc is ejected while the disc-unbound application operates, the playback terminal does not terminate the disc-unbound application, but causes the disc-unbound application to continue to operate. The disc-unbound application continues to operate even after the disc has been ejected. Then, if a disc inserted next correlates to the ejected disc that has been played back immediately before, the disc-unbound application continues to operate. If the disc inserted next does not correlate to the ejected disc, the disc-unbound application is terminated by the playback terminal. In the case where movie works, which are stored on a plurality of respective discs, correlate to each other and belong to the same series for example, a disc-unbound application is prepared in common between these correlated movie works. Accordingly, when replacement between these discs is performed, there occurs no termination and start-up of the application. This reduces start-up delay of the application.

### [Citation List]

### [Patent Literature]

[Patent Literature 1] Japanese Patent No. 2813245
[Patent Literature 2] Japanese Patent Application No. 2006-527189

### [Non-Patent Literature]

[Non-Patent Literature 1] SD Association, home page, http://www.sdcard.org/

### [Summary of Invention]

### [Technical Problem]

By the way, storage media have been recently increased in capacity. Also, there have developed flash media having a capacity as large as that of BD-ROM discs. For example, SD memory cards have been formulated as flash media that realize a capacity of up to 2 GB. With the recent increase in capacity of storage media, the SD Association formulated the SDHC memory card standard that realizes a capacity of up to 32 GB as a higher-level standard. Furthermore, formulation is now underway for a further higher-level standard of a capacity of 64 GB or higher, namely the flash media standard.

Furthermore, with the spread of mobile terminals and the enhancement of the Video-on-Demand service for TV, the number of contents users grows. There is an expectancy, depending on the progress of the network infrastructure, that HD contents equivalent to contents stored on BD-ROM discs will be electronically distributed. Hereinafter, distribution of HD contents as a form not in package but in digital information is referred to as "digital distribution".

There is an expectancy, with the increase in capacity of flash media and the spread of digital distribution in the near feature, that HD contents will be stored not only on BD-ROM discs but also on flash media so as to be viewable by users. Particularly in the case where flash media become widespread which have larger capacity than BD-ROM discs, works contained in a plurality of respective BD-ROM discs will be stored on a single flash medium.

With such use of flash media, movie works belonging to the same series, which have been recorded separately in a plurality of BD-ROM discs, can be recorded collectively in a single flash medium. This enhances convenience since a user has no need to replace discs for switching between movie works recorded in a single flash medium.

However, in the case where a movie work, which is supplied in a commercially available BD-ROM disc, is supplied as an HD content to be stored on a flash medium, a playback terminal needs to determine whether to control an application to continue to operate in accordance with disc replacement. Accordingly, since a conventional playback terminal is incapable of performing processing on a disc-bound application and/or a disc-unbound application contained in the movie work in the same manner as in BD-ROM discs. This causes a problem as to how to control the operations of the application.

Assume, for example, that a flash medium has stored thereon two movie works (movie works 1 and 2) each containing a different disc-bound application. When a playback target is switched from the movie work 1 being played back to the work movie 2, a playback terminal starts up the disc-bound disc application of the movie work 2 without terminating the disc-bound disc application of the movie work 1. Here, these two disc-bound applications are not intended for simultaneous operations. Accordingly, there is a possibility that an unexpected trouble occurs in execution such as memory insufficiency and resource contention, and operations as expected by a creator of the movie work cannot be realized.

In view of the above problem, the present invention aims to provide a program execution device that ensures reliable operations of a playback terminal that plays back a plurality of movie works stored on a single storage medium.

### [Solution to Problem]

In order to achieve the above aim, the present invention provides an application execution device for executing an application on a storage medium, the plurality of domains each having stored thereon: a plurality of applications; a plurality of application management tables; and an index table, the application execution device reading an application from one of the plurality of domains and executing the read application, the application execution device comprising: a designation unit operable to designate one of the plurality of domains as a current domain; a playback unit operable to, in the current domain, play back one of a plurality of titles with reference to an index table that shows a one-to-one correspondence between the plurality of application management tables and a plurality of playable titles and; and an application manager operable to manage, in the current domain, operations of at least one application indicated by an application management table corresponding to a title that is played back as having a life cycle in the title, wherein when the designation unit switches the current domain to another one of the plurality of domains as a new current domain, the playback unit starts playing back a first play title that is to be played back firstly among a plurality of titles stored on the new current domain, and the application manager terminates operations of a disc-unbound application that has been operating before the switching of the current domain and is indicated by an application management table corresponding to the first play title as not having a life cycle in the first play title.

### [Advantageous Effects of Invention]

With the above structure, when a playback target is switched from one movie work stored on a domain of a storage medium to another movie work stored on another domain of the storage medium, an application is caused to continue to operate, which has been operating during playback of the one movie work before switching the playback target and is shown by an application management table corresponding to a first play title of the other movie work. This saves the effort of terminating the application in execution for switching between the movie works and starting up the same application for starting playing back the other movie work to be newly played back. As a result, it is possible to exhibit an effect that start-up delay for starting up the application is mostly eliminated, which has been originally exhibited in the case of playback of BD-ROM discs.

Also, an application is terminated, which has been operating during playback of the one movie work before switching the playback target and is not shown by the application management table corresponding to the first play title of the other movie work. This prevents execution of an application which is not expected to operate in the first play title of the other movie work from being executed during playback of the first play title of the other movie work. Accordingly, when a playback target is switched between movie works that are stored on respective different domains of one storage medium, it is possible to prevent occurrence of an unexpected trouble such as memory insufficiency and resource contention due to execution of applications which are not intended for simultaneous operation, in the same way as in control on replacement of a playback target BD-ROM disc.

### [Brief Description of Drawings]

FIG. 1 shows a playback system according to a first embodiment of the present invention.
FIG. 2 shows the internal structure of a BD-ROM.
FIG. 3 shows the details of a BD-J object.
FIG. 4 shows the details of an application management table.
FIG. 5 shows values set in a control_code Field in the application management table.
FIG. 6 shows values set in an application_binding field in the application management table.
FIG. 7 shows the internal structure of Index.bdmv.
FIG. 8 shows a relation between index.bdmv and title.
FIG. 9 shows a layer model of software stored on the BD-ROM.
FIGs. 10A and 10B each show a movie work played back under dynamic control in a different mode.
FIG. 11 shows the internal structure of a playback device 200.
FIG. 12 shows the directory structure of a local storage.
FIGs. 13A and 13B each show a screen with which an OSD plane is overlaid during playback in a different mode.
FIG. 14 shows the detail structure of a BD-J module 14.
FIG. 15 is a flow chart showing a procedure of recording processing in the playback device 200.
FIG. 16 shows a procedure of application control processing performed by an application manager 31.
FIG. 17 is a flow chart showing a procedure of application control processing associated with disc replacement.
FIG. 18 is a flow chart showing a procedure of application control processing associated with title switching.
FIG. 19 is a flow chart showing a procedure of switching processing between movie works stored on a local storage.
FIG. 20 shows a relation among an OSD plane onto which a movie work switching screen is rendered, is overlaid with a video plane and an image plane.
FIG. 21 shows an example of the movie work switching screen rendered on the OSD plane.
FIG. 22 is a flow chart showing a procedure of application control processing associated with switching between movie works stored on the local storage.
FIG. 23 shows the title structure, the application structure, and application management tables with respect to a BD-ROM disc 101 on which a movie work 1 is stored.
FIG. 24 shows the title structure, the application structure, and application management tables with respect to a BD-ROM disc 102 on which a movie work 2 is stored.
FIG. 25 shows the title structure, the application structure, and application management tables with respect to a BD-ROM disc 103 on which a movie work 3 is stored.
FIG. 26 typically shows the title structure, the application structure, and application management tables with respect to a local storage on which the movie works 1, 2, and 3 are stored.
FIG. 27 is a flow chart showing user operations and control by the playback device 200 in case of switching from the movie work 1 to the movie work 2 stored on the local storage.
FIG. 28 is a flow chart showing user operations and control by the playback device 200 in case of switching from the movie work 1 to the movie work 3 stored on the local storage.
FIG. 29 shows the detail structure of a BD-J module according to a second embodiment of the present invention.
FIG. 30 is a flow chart showing a procedure of processing of requesting for movie work switching performed by an application according to the second embodiment of the present invention.
FIG. 31 is a flow chart showing a procedure of processing of switching between movie works performed by an application according to a third embodiment of the present invention.
FIG. 32 shows the directory structure of a local storage containing a manager title according to a fourth embodiment of the present invention.
FIG. 33 shows the difference in access right between a manager title and a movie work according to the fourth embodiment of the present invention.
FIG. 34 is a flow chart showing a procedure of access right type judgment processing according to the fourth embodiment of the present invention.
FIG. 35 is a flow chart showing a procedure of processing of displaying a list of movie works stored on a local storage according to the fourth embodiment of the present invention.
FIG. 36 typically shows download of a movie work according to the fourth embodiment of the present invention.
FIG. 37 is a flow chart showing a procedure of processing of downloading a movie work according to the fourth embodiment of the present invention.

### [Description of Embodiments]

The following describes embodiments of the present invention with reference to the drawings.

### (First Embodiment)

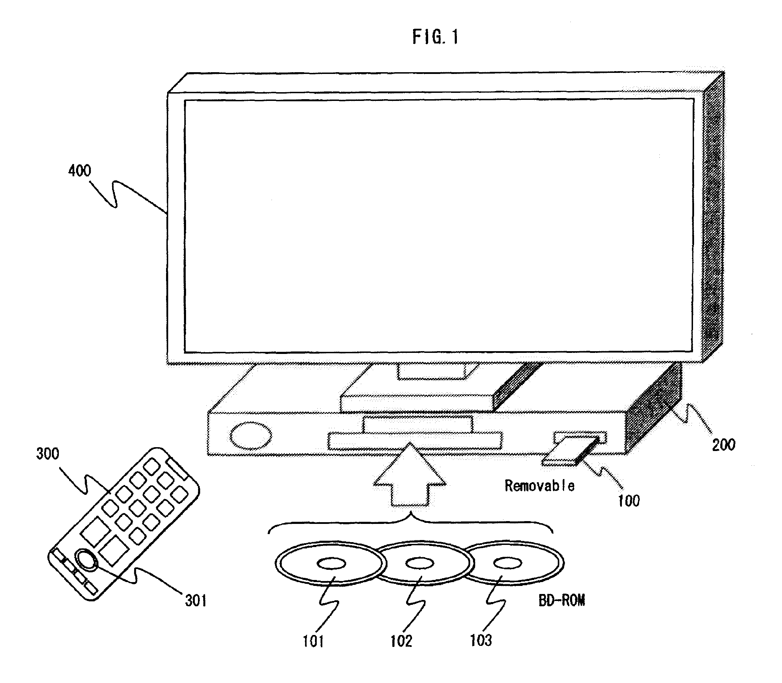

To begin with, description is given of a usage pattern among implementation patterns of a playback device relating to the present invention. FIG. 1 shows an example of the usage pattern of the application execution device relating to the present invention. FIG. 1 shows a playback device 200 as an application execution device relating to the present invention. The playback device 200 constitutes a home theater system together with a remote control 300 and a TV 400. The playback device 200 plays back movie works stored on BD-ROMs 101, 102, and 103. The playback device 200 is provided with an insertion slot of a removable medium 100 is inserted, such as an SD memory card, a memory stick, a Compact Flash™, a smart media, and a multimedia card. The removable medium 100 has a sufficient capacity to record a plurality of movie works stored on the BD-ROM disc. This completes the description of the usage pattern of the playback device relating to the present invention.

Next, description is given of a "movie work" which is a playback target in the home theater system according to the present embodiment. The playback device 200 plays back, in addition to a movie work stored on a BD-ROM, a movie work provided via any media such as a Built-In medium, a removable medium, a network, and a recordable disc. Here, the Built-In medium is a storage medium incorporated beforehand into the playback device such as an HDD (Hard Disc Drive). On the other hand, the removable medium is a portable storage medium such as an SD memory card, a memory stick, a CompactFlash^{™}, a smart media, and a multimedia card. These Built-In medium and removable medium are each a storage medium for local use by the playback device, and collectively referred to as a "local storage". The present embodiment uses an example where a plurality of movie works are stored on the local storage. The present invention is also applicable to the case where a plurality of movie works are stored on a BD-ROM.

First, description is given of the structure of a movie work stored on a BD-ROM disc.

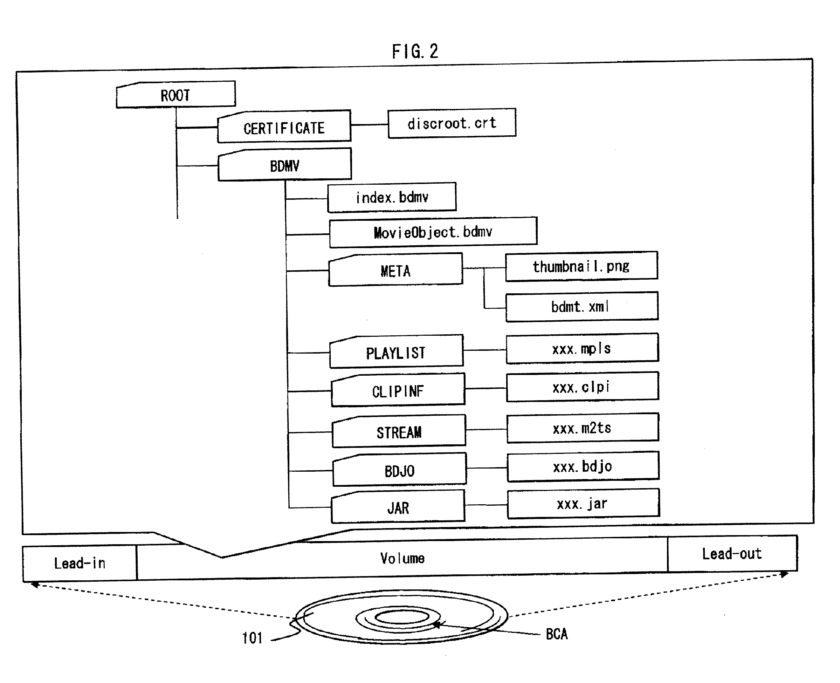

FIG. 2 shows the structure of the BD-ROM (referred to also as a "BD") disc. In the present embodiment, the description is given based on the assumption that the BD-ROM standard is used as the format of a movie work to be stored on a storage medium. Alternatively, it may be possible to employ any format that can realize playback of digitized movie work and execution of application in the similar way as the BD-ROM standard. As well as other optical discs such as a DVD and a CD, a BD-ROM has a recording area that lies spirally from its inner circumference to outer circumference, and includes a logical address space for recording logic data between a lead-in on the inner circumference and a lead-out on the outer circumference. Also, a special area called a BCA (Burst Cutting Area) which is readable only by a drive, lies inside the lead-in. This special area cannot be read by an application, and accordingly is often used for copyright protection techniques, for example. In this area, a PMSN (Prerecorded Media Serial Number) is recorded which indicates a physical serial number of the storage medium.

File system information (volume) is recorded at the start of the logical address space. Application data such as video data is recorded following the file system information. The file system is, for example, the UDF file system or the ISO9660 file system. The file system allows logical data recorded in similarly to general PCs to be read using a directory or file structure. Filename or directory name of 255 characters can be read.

According to the directory or file structure of the BD-ROM according to the present embodiment, directly under a ROOT directory, a BDMV directory and a CERTIFICATE directory are located. In the BDMV directory, data is recorded such as AV contents relating to the BD-ROM and management information. Under the CERTIFICATE directory, a discroot.crt (fixed file name) file is located. In the discroot.crt file, a certificate for signature verification of application is recorded.

Under the BDMV directory, five subdirectories are located including a META directory, a PLAYLIST directory, a CLIPINF directory, a STREAM directory, a BDJO directory, and a JAR directory. In the BDMV directory, two types of files are located including an index.bdmv file and a MovieObject.bdmv file.

In the META directory, two types of files are located including a thumbnail image file (thumbnail.png) indicating a movie work stored on the BD-ROM and a file (bdmt.xml) in which information of the movie work is recorded such as a title and a recording time period.

In the STREAM directory, a file with an extension m2ts (xxx.m2ts) is stored ("xxx" is variable and "m2ts" is fixed). This file mainly constitutes a digital stream. In the PLAYLIST directory, a file with an extension mpls (xxx.mpls) is stored ("xxx" is variable and "mpls" is fixed). In the CLIPINF directory, a file with an extension clpi (xxx.clpi) is stored ("xxx" is variable and "clpi" is fixed). In the JAR directory, a file with an extension jar (xxx.jar) is stored ("xxx" is variable and "jar" is fixed). In the BDJO directory, a file with an extension bdjo (xxx.bdjo) is stored ("xxx" is variable and "bdjo" is fixed). The following describes the above files.

The file with the extension "m2ts" is a digital AV stream in the MPEG-TS (Transport Stream) format, and is obtained by multiplexing a video stream, an audio stream, and a subvideo stream. The video stream, the audio stream, and the subvideo stream represent video parts, audio parts, and subtitles of the movie work, respectively.

The file with the extension "clpi" is a piece of clip information corresponding to each digital AV stream. The clip information, being management information, contains information such as the encoding format, frame rate, bit rate, and resolution of the digital AV stream, and EP_map indicating the head location of a GOP.

The file with the extension "mpls" records therein PlayList information including a playback section of the stream ("In Time/Out Time").

The file with the extension "jar" is a Java^{™} archive file. In the file, a program of a Java^{™} application is described, which performs dynamic scenario control using a Java^{™} virtual machine. This file is necessary for the Java^{™} application to control playback of each title representing a playback unit of the content stored on the BD-ROM.

The MovieObject.bdmv file (fixed file name) includes a scenario program in which a scenario is described for dynamically changing proceeding of playback of each title in the HDMV mode (mentioned later).

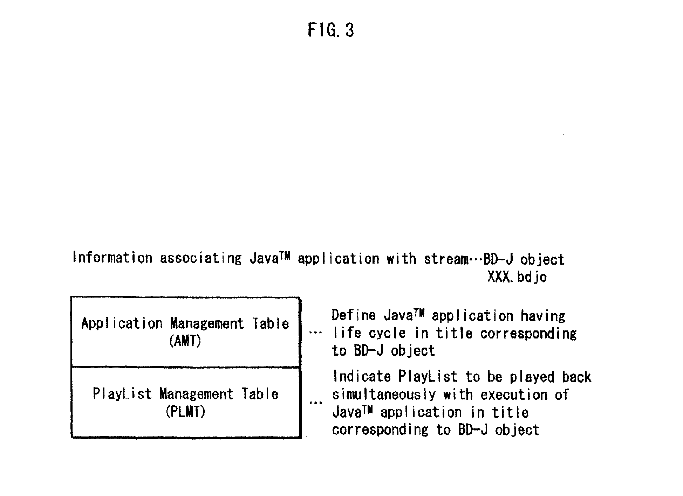

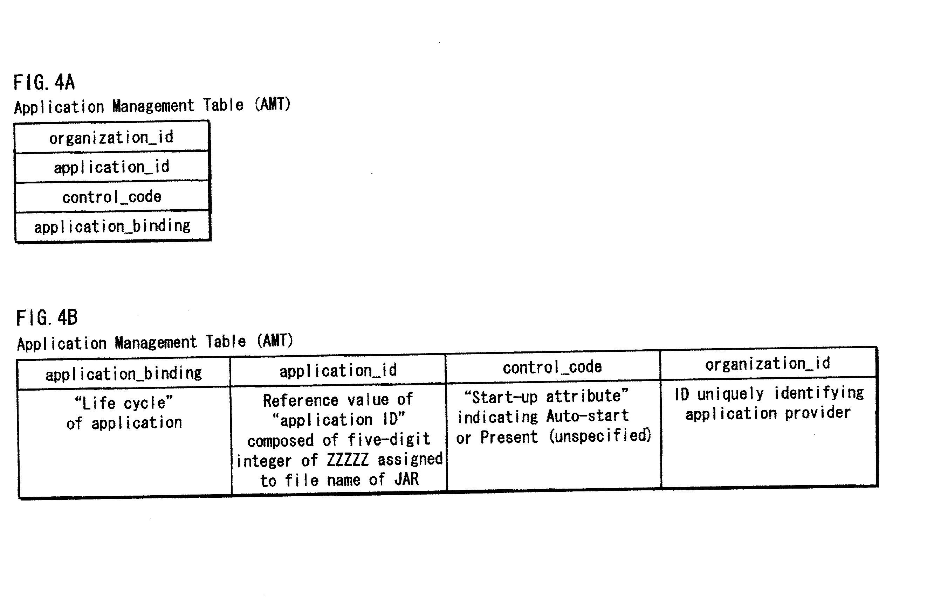

The following describes the file with the extension "bdjo". In the file with the extension "bdjo", an BD-J object showing a dynamic scenario in the BD-J mode (mentioned later) is recorded. The BD-J object is information that defines a title by associating a playback path of the AV stream indicated by the PlayList information with an application. FIG. 3 shows the internal structure of the BD-J object. As shown in FIG. 3, the BD-J object includes an "application management table (AMT)" and a "playlist management table (PLMT)" that shows a PlayList that is playable in the defined title. The application management table shows an application having a life cycle in this title. The application management table has fields including an organization ID, an application ID, a control_code, and an application_binding for each application, as shown in FIG 4.

The organizetionID identifies a manufacturer of the application. The application ID identifies a target Java^{™} application using a numerical value indicating a file name of a Java^{™} archive file.

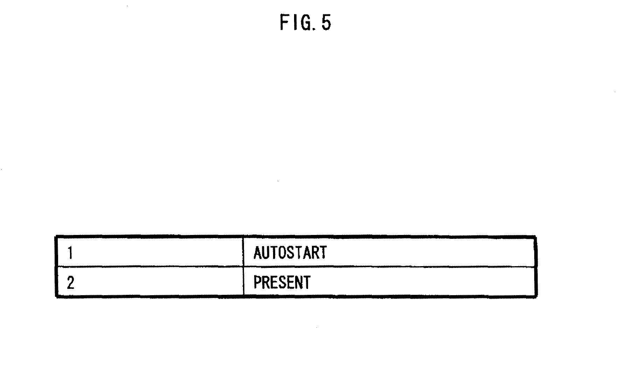

The control_code indicates a start-up attribute of application. As shown in FIG. 5, the control_code has a value "AUTOSTART" representing automatic start-up and a value "PRESENT" representing allowance of presence in a work memory of the Java™ virtual machine. The attribute "AUTOSTART" indicates switching to a corresponding title, reading the application into the work memory, and executing the read application. The attribute "PRESENT" indicates continuation of the status of the application in a title from which the application has been switched. In order to switch a playback target from a certain title to another title, the application needs to has a control_code indicating "PRESENT" and already has started up in the certain title. Otherwise, the application also would not start up in the other application to which the application has been switched.

The application_binding field indicates a life cycle of the Java™ application. The life cycle of the application is defined by the following two types of attributes. One is a title life cycle attribute that indicates a life cycle in a title. The other is a disc life cycle attribute that indicates a life cycle in the time axis of the whole disc. The application_binding field represents indicates the attribute of the application in this way.

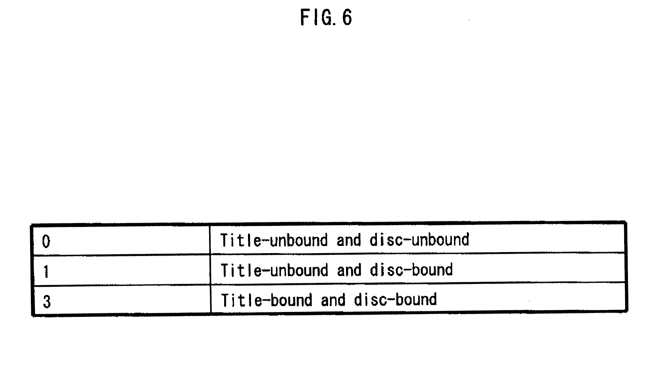

FIG. 6 shows a relation between value of application_binding field and each of the title life cycle attribute and the disc life cycle attribute. The title life cycle attribute, which indicates a life cycle in a title, includes "title-bound" and "title-unbound". An application having the title life cycle attribute "title-bound" is permitted to operate only in a BD-J object including an application management table in which the application is registered. That is, the application is permitted to operate only in a BD-J mode title. When the BD-J mode title ends in accordance with title switching or playback end, the application needs to be terminated. An application having the title life cycle attribute "title-unbound" is permitted to operate in a BD-J object including an application management table in which the application is registered. That is, the application is permitted to operate in a BD-J mode title. Furthermore, when the application is also recorded in a BD-J object of a BD-J mode title that is a switching target, the application is permitted to continue to operate even after the BD-J mode title that is the switching source ends.

The disc life cycle attribute, which indicates a life cycle defined in the time axis of the whole disc, includes "disc-bound" and "disc-unbound". An application having the disc life cycle attribute "disc-bound" is permitted in only a single disc. When the single disc ends due to replacement with another disc, the application needs to be terminated. An application having the disc life cycle attribute "disc-unbound" is permitted to operate across a plurality of discs. Even when disc replacement is performed and a disc that is a replacement source ends, the application continues to operate. When a disc that is a replacement target has a BD-J mode First Play title and the application is also recorded in the application management table of the BD-J object, the application is permitted to continue operate even after switching to the First Play title in the replacement target disc.

Hereinafter, applications having values of 0, 1, and 3 of application_binding field are referred to as a "disc-unbound application", a "disc-bound application", a "title-bound application", respectively.

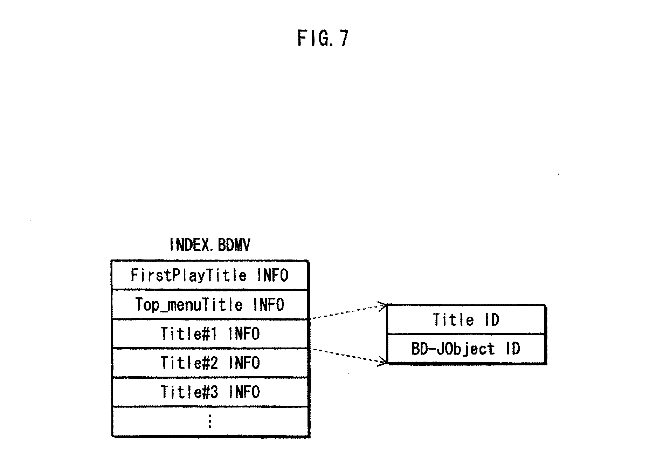

Next, the index.bdmv file is described. The index.bdmv file is a data base file relating to the entire BD-ROM, and includes information such as an organization ID (32 bit) identifying a provider of each movie work and a disc ID (128 bit) assigned to each BD-ROM provided by the provider. Since the index.bdmv file is read first after the disc is inserted into the playback device, the disc is uniquely identified by the playback device. In addition, the index.bdmv file includes, as shown in FIG. 7, an index relating to each of a plurality of titles playable in the BD-ROM. In FIG. 7, a lead line closes up the data structure of the index. In the index of the title, this data structure shows that an ID of the title is associated with a BD-J object defining the title.

The playback device recognizes a group of titles associated within one index file as one "movie work".

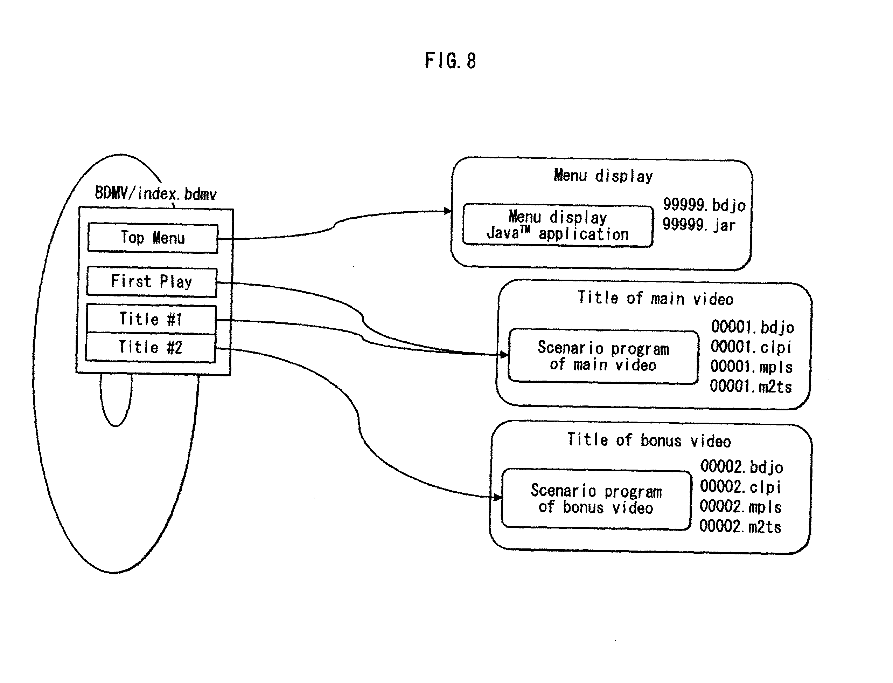

FIG. 8 shows a relation between index.bdmv file and title. The title is a unit of playback pairing an application and an AV stream. The index.bdmv file has described therein the title structure on the disc, and manages the reference relation between each title on the disc and an application corresponding to the title (Java^{™} application corresponding to the BD-J mode title and scenario program corresponding to the HDMV mode title). Also, the titles include special titles "First Play" and "Top Menu". The "First Play" title is played back automatically when a BD is started up, and is used for mainly displaying the terms of service of the BD. The "Top Menu" title is played back when the menu key of the remote control is pressed or when playback of a title ends, and is used for mainly selecting a title, selecting a language for subtitles and audio tracks, and so on.

Next, description is given of start-up of a Java^{™} application at title switching, which is a playback target of the playback device relating to the present invention. Here, the title switching means both of switching from a title to another title that are defined in the same disc and switching between titles across a plurality of discs, namely, switching from a title defined in a disc to a title defined in another disc.

An application management table of a BD-J object contains information necessary for controlling execution of an application, such as a start-up timing and a life cycle of the application, in addition to an ID of a provider of the application (organization ID), an application ID, and an ID of a Java^{™} archive file belonging to the application. Each time title switching is performed, the playback device refers to such information to control the operaion status of a Java^{™} application operating in the BD-J mode, in accordance with a value (control_code Field) indicating a start-up attribute in the application management table.

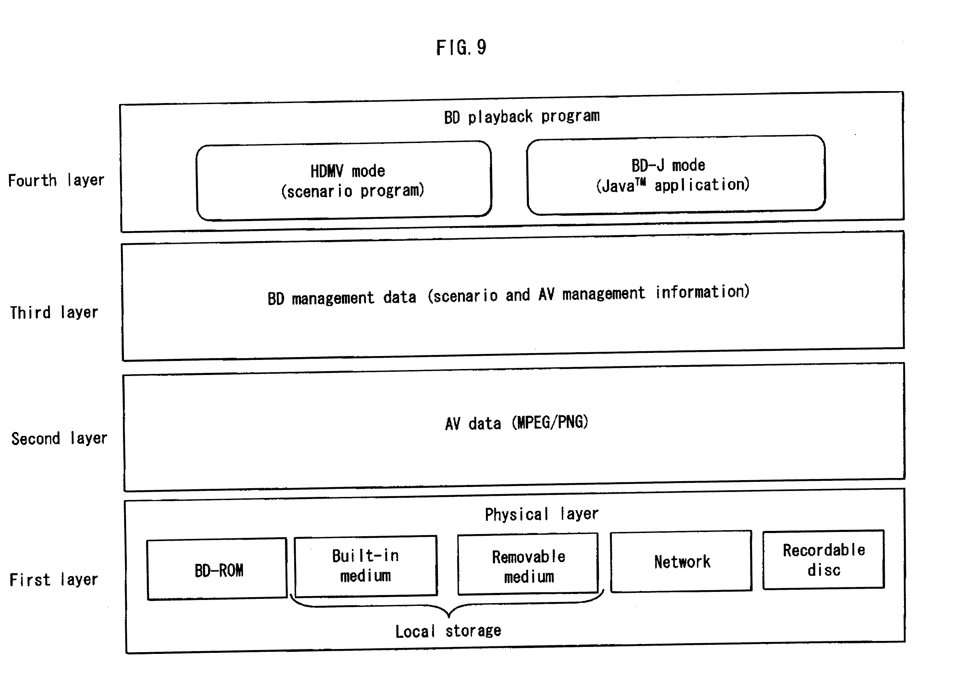

FIG. 9 shows a layer model of playback control. In FIG. 9, the first layer is a physical layer where control of supplying a stream targeted for processing is performed. As shown in the first layer, the targeted stream has, as its supply sources, not only a BD-ROM but also various other types of recording and communication media including a Built-In medium, a removable medium, a network, and a recordable disc. The first layer performs controls on these supply sources such as the local storage and the network (disc access, card access, and network communication).

The second layer is a layer relating to AV data. The second layer specifies a decoding format for decoding the stream supplied in the first layer.

The third layer (BD management data) is a layer for specifying a static scenario of the stream. The static scenario is playback path information and stream management information specified in advance by a disc author. The third layer specifies playback control based on the static scenario.

The fourth layer (BD playback program) is a layer for realizing a dynamic scenario of the stream. The dynamic scenario is a program that executes at least one of a playback procedure of the AV stream and a control procedure relating to the playback. The playback control based on the dynamic scenario changes in accordance with user operations on the device, and has a property similar to a program. Here, the dynamic playback control has two modes. One is a mode for playing video data stored on a BD-ROM in a playback environment specific to AV devices (HDMV mode). The other is a mode for enhancing an added value of the video data stored on the BD-ROM (BD-J mode). In FIG. 9, the two modes of the HDMV mode and the BD-J mode are defined in the fourth layer. The HDMV mode is a playback mode in a DVD-like playback environment. A scenario program, having a scenario written thereon to dynamically change a progress of playback, operates in this mode. The BD-J mode is a playback mode based on a Java^{™} virtual machine, and performs playback via a Java^{™} application.

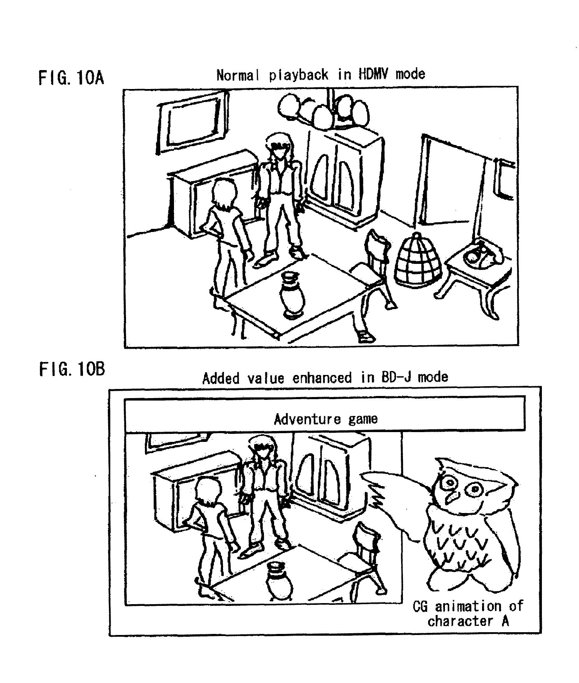

FIGs. 10A and 10B show a movie work created by dynamic playback control in the above two modes. FIG. 10A shows a scene from the movie work created by defining the dynamic playback control in the HDMV mode. Since the HDMV mode allows playback control to be written using a command that closely resembles and is comprehensible to DVD playback devices, it is possible to define playback control similar to that used for DVDs, that is, playback control that allows playback to progress in accordance with a selection made on a menu.

FIG. 10B shows a scene from the movie work created by defining the dynamic playback control in the BD-J mode. In the BD-J mode, a control procedure can be written in a Java^{™} language interpretable by the Java^{™} virtual machine. When this playback control is designed to control movement of computer graphics (CG), such playback control that moves CG (a picture of an owl in FIG. 3B) beside a video display can be realized in the Java (TM) mode.

This completes the description of the "movie work" targeted for playback in the home theater system.

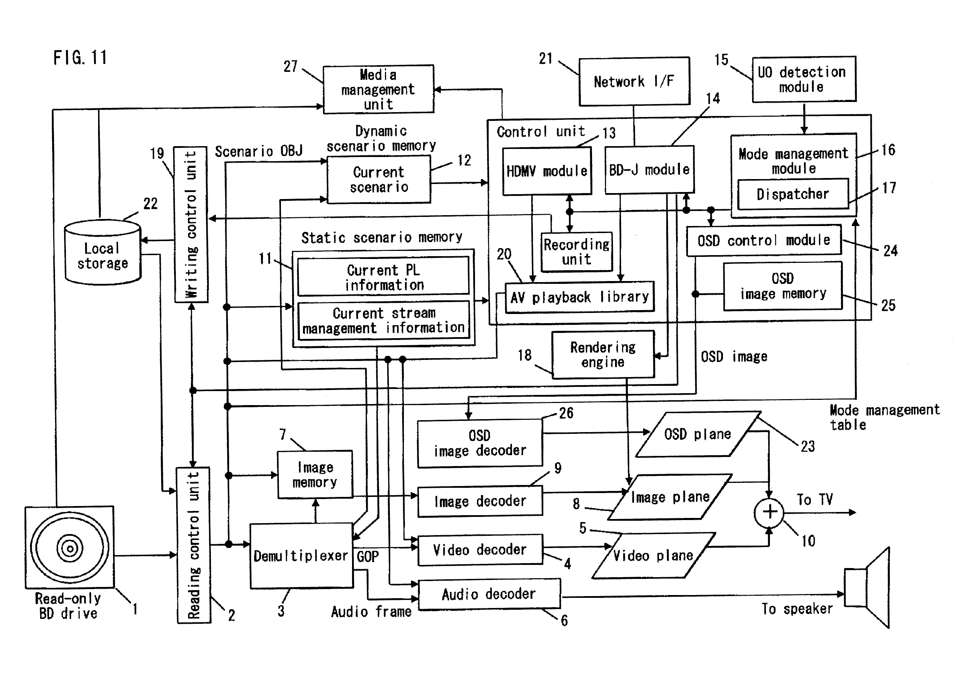

The following describes the structure of the playback device 200. FIG. 11 is a block diagram showing the general functional structure of the playback device 200. The playback device 200 includes, as shown in FIG. 11, a BD-ROM drive 1, a reading control unit 2, a demultiplexer 3, a video decoder 4, a video plane 5, an audio decoder 6, an image memory 7, an image plane 8, an image decoder 9, an adder 10, a static scenario memory 11, a dynamic scenario memory 12, an HDMV module 13, a BD-J module 14, a UO detection module 15, a mode management module 16, a dispatcher 17, a rendering engine 18, a writing control unit 19, an AV playback library 20, a network interface 21, a local storage 22, an OSD plane 23, an OSD control module 24, an OSD image memory 25, an OSD image decoder 26, a media management unit 27, and a recording unit 28. A control unit is composed of the HDMV module 13, the BD-J module 14, the mode management module 16, the dispatcher 17, the AV playback library 20, the OSD control module 24, the OSD image memory 25, and the recording unit 28. The control unit is realized by a processor executing a program stored on a ROM. Alternatively, the control unit may be realized by wired logic, ASIC, or the like.

The BD-ROM drive 1 performs loading and ejecting of a BD-ROM, and accesses the BD-ROM.

The reading control unit 2 performs reading control of data stored on a BD-ROM loaded onto the BD-ROM drive 1 or the local storage 22.

The demultiplexer 3 demultiplexes transport streams read by the reading control unit 2 to obtain video frames and audio frames constituting a GOP. The demultiplexer 3 outputs the obtained video frames and audio frames to the video decoder 4 and the audio decoder 6, respectively. Subvideo streams are stored on the image memory 7. Navigation Button information is stored on the dynamic scenario memory 12. The demultiplexing performed by the demultiplexer 3 includes processing of converting TS packets to PES packets.

The video decoder 4 decodes the video frames received from the demultiplexer 3 to write pictures in uncompressed form into the video plane 5.

The video plane 5 is a memory for storing pictures in uncompressed form.

The audio decoder 6 decodes audio frames received from the demultiplexer 3 to output audio data in uncompressed form.

The image memory 7 is a buffer for storing the subvideo streams read from the demultiplexer 3, PNG data included in the Navigation Button information, and an image file directly read by the reading control unit 2.

The image plane 8 is a memory having a region for one screen, in which expanded subvideo streams, PNG data, and image file are located.

The image decoder 9 expands the subvideo streams, PNG data, and image file that are stored on the image memory 7, and writes the expanded subvideo streams, PNG data, and image file into the image plane 9. The decoding of the subvideo streams results in display of various menus and subvideo on the screen.

The adder 10 composites the image expanded on the image plane 8 with the uncompressed picture data stored on the video plane 5, and outputs a result. By compositing the image on the image plane 8 with the picture on the video plane 5, the adder 10 outputs the image display shown in FIG. 3B, i.e., the screen display in which the CG (the picture of the owl in FIG. 3B) moves beside the video display.

The static scenario memory 11 is a memory for storing a current PlayList and current stream management information. The current PlayList is a PlayList that is currently being processed among a plurality of PlayLists stored on the BD-ROM or the local storage 22. The current stream management information is stream management information that is currently being processed among a plurality of pieces of stream management information stored on the BD-ROM or the local storage 22.

The dynamic scenario memory 12 is a memory for storing a current dynamic scenario, and is used for processing performed by the HDMV module 13 and the BD-J module 14. The current dynamic scenario is a scenario that is a current execution target among a plurality of scenarios stored on the BD-ROM or the local storage 22. Specifically, the current dynamic scenario is a MovieObject.bdmv file in the HDMV mode or a BD-J object in the BD-J mode corresponding to a title that is currently being processed.

The HDMV module 13 is a DVD virtual player that executes the HDMV mode, and executes the current scenario program read to the dynamic scenario memory 12.

The BD-J module 14 is a Java^{™} platform, and includes the Java^{™} virtual machine, configuration, and profile. The BD-J module 14 generates a current Java^{™} object from a Java^{™} class file read to the dynamic scenario memory 12, and executes the current Java^{™} object. The Java^{™} virtual machine converts the Java^{™} object written in the Java^{™} language into a native code of a CPU in the playback device, and has the CPU execute the native code.

The UO detection module 15 detects user operation performed on a remote control or a front panel of the playback device, and outputs information indicating the detected user operation (hereinafter referred to as "UO") to the mode management module 16.

The mode management module 16 functions as a designation unit for designating any movie work stored on the BD-ROM disc or the local storage 22 in response to UO as a playback target, and designating a BDMV directory on which the playback target is stored as a current directory. The mode management module 16 designates the current directory, and holds therein an index.bdmv file and a mode management table read from the current directory, and performs mode management and title branch control. The mode management module 16 performs mode management by designating which of the HDMV module 13 and the BD-J module 14 for executing a dynamic scenario. In order to cause the BD-J module 14 to execute the dynamic scenario, the mode management module 16 performs title branch control by notifying the BD-J module 14 of a current title that is a playback target.

The dispatcher 17 selects only UO appropriate to a current mode of the playback device among UOs, and passes the selected UO to a module for executing the mode. For example, if UO is received such as "left", "right", "up", "down" and "activate" in the HDMV mode, the dispatcher 17 outputs the received UO to a module in the HDMV mode.

The rendering engine 18 has infrastructure software such as Java^{™} 2D and OPEN-GL, and renders CG in accordance with an instruction from the BD-J module 14, and outputs the rendered CG to the image plane 8.

The writing control unit 19 writes data into the local storage 22 in accordance with an instruction from the BD-J module 14.

The AV playback library 20 functions as a playback unit for executing an AV playback function and a PlayList playback function in response to a function call from the HDMV module 13 or the BD-J module 14. The AV playback function is a group of functions similar to that found in DVD players and CD players, including processes such as playback start, playback stop, playback pause, pause release, still image release, forwarding at a rate specified by an immediate value, rewinding at a rate specified by an immediate value, audio switching, subvideo switching, and angle switching. The PlayList playback function is a function for performing playback start and playback stop among these AV playback functions according to the PlayList information.

The network interface 21 is used for connection with a server in order to download a movie work released on the Web and a BD-ROM additional content, perform user authentication, and charge a user. The a BD-ROM additional content is a content, which is not originally stored on the BD-ROM and is to be added to the BD-ROM, such as additional secondary audio, subtitles, bonus video, and an application. The BD-J module 14 controls the network interface 21 to download a movie work released on the Web and a BD-ROM additional content to the local storage 22. The local storage 22 is also used for saving the downloaded additional content and data to be used by an application. Storage regions of additional contents are separated for each BD-ROM. Also, storage regions of data to be used by applications are separated for each application. Also, in the local storage 22, merge management information is stored, which describes merge rules indicating how to merge the downloaded additional contents with data stored on the BD-ROM. Furthermore, in the local storage 22, a movie work stored on the BD-ROM disc is copied and the copy is stored on a BDROOT directory that is a movie work saving region.

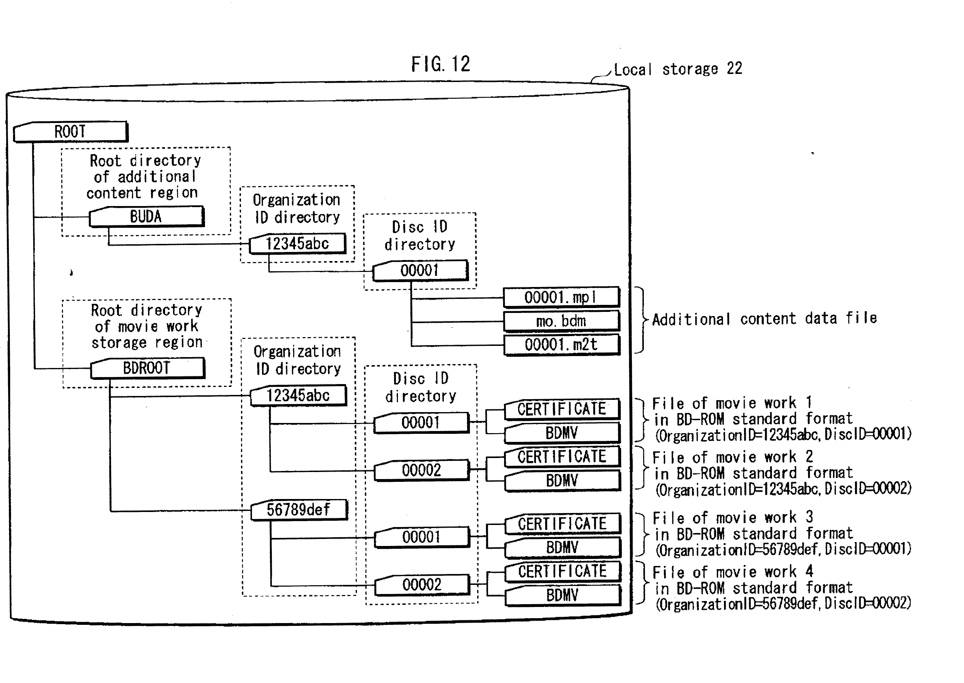

FIG. 12 shows the data structure of the local storage 22. Storage media as playback targets of the playback device relating to the present invention includes a local storage such as a hard disc and an SD card, in addition to a BD-ROM. The following describes data stored on the local storage.

The local storage 22 has a BD-ROM additional content region root directory and a movie work saving region root directory.

The BD-ROM additional content region root directory is located directly under a root directory of the local storage 22, and has a directory name represented as a fixed value of up to eight characters (BUDA). In this BUDA directory and its subordinate (including its subdirectory and files located thereunder), the application can store any file such as an additional file downloaded from the server.

As indicated by the organization ID directory and the disc ID directory, a directory corresponding to each BD-ROM is provided in a directory corresponding to a particular provider (Organization). Accordingly, downloaded data for each BD-ROM is separately stored.

The movie work saving region is a region for saving a plurality of movie works in a format compliant with the BD-ROM standard, and has a directory name represented as a value of up to eight characters (BDROOT). A movie work to be saved in a movie work saving region is acquired by downloading one released on the Web, and performing managed copy of one stored on a BD-ROM using a network-connectable apparatus (Japanese Patent Publication Application No. 2008-98765). Data of a downloaded movie work can be stored on a directory (00001) having a disc ID of the movie work, which is a subdirectory of a directory (56789abc) that has an organization ID indicating a provider of the movie work and is located directly under the root directory of the local storage 22. In the present embodiment, a disc ID, which is an identifier allocated to each BD-ROM provided by the provider, is also applied to a movie work saved in the movie work saving region. Alternatively, as long as each movie work is identifiable, any name may be employed instead of the disc ID. Under BDROOT/56789abc/00001 in the movie work saving region, data of each movie work is saved in accordance with the file structure of the BD-ROM standard. In the present embodiment, a directory for each movie work is located directly under the root directory of the local storage 22. Alternatively, location or hierarchy may be changed in order to introduce a data file for managing a plurality of movie works or a navigation menu. Since a storage medium used as the local storage 22 sometimes has a unique file system, it might be impossible to use a file name compliant with the BD-ROM standard without change for saving a movie work in the movie work saving region. In such a case, a file name compliant with a file system of each storage medium is used for saving a movie work in the local storage 22. In consideration of change to a file name compliant with a file system of each storage medium, the playback device 200 can re-recognize and read the changed file name as a file name compliant with the BD-ROM standard. In the present embodiment, a file name compliant with the BD-ROM standard is saved in the movie work saving region without modification, irrespective of the difference in file system between local storages.

The OSD image memory 25 is a memory having a region for one screen. On the OSD image memory 25, an image for OSD display is stored, which is for the OSD control module 24 to overlay the playback status and setting menu of the playback device with the video plane or image plane for display.

The OSD image decoder 26 expands the image for OSD display stored on the OSD image memory 25, and writes the expanded image for OSD display into the OSD plane 23.

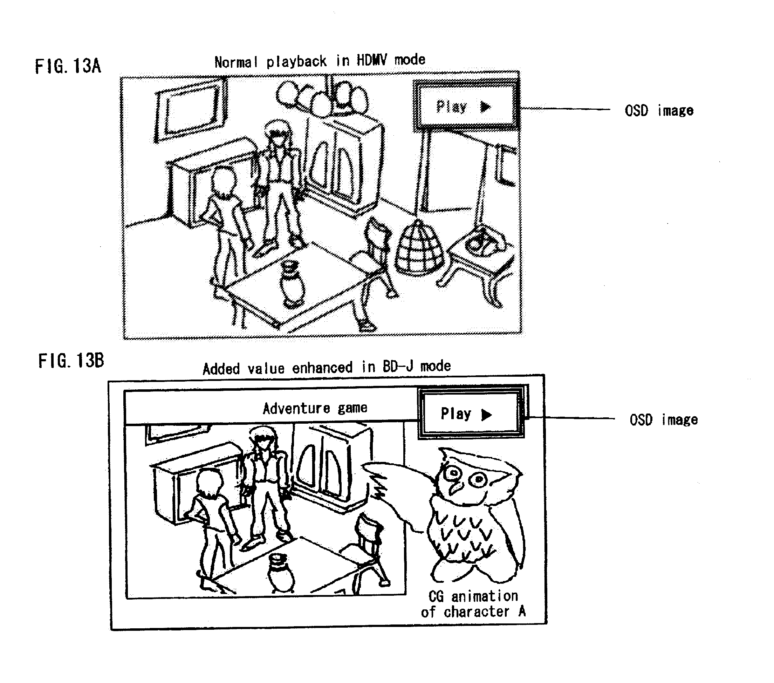

FIG. 13A shows an example of a screen display where an OSD plane, into which an OSD image indicating the playback status is written, is overlaid with a video plane playing back an HDMV mode title. FIG. 13B shows an example of a screen display where an OSD plane, into which an OSD image indicating the playback status is written, is overlaid with a video plane and an image plane playing back a BD-J mode title.

The media management unit 27 manages the status indicating whether a storage medium is inserted into the BD-ROM drive 1 or the local storage 22.

The recording unit 28 controls recording processing of recording a movie work, which is stored on a BD-ROM inserted into the BD-ROM drive 1, into the local storage 22.

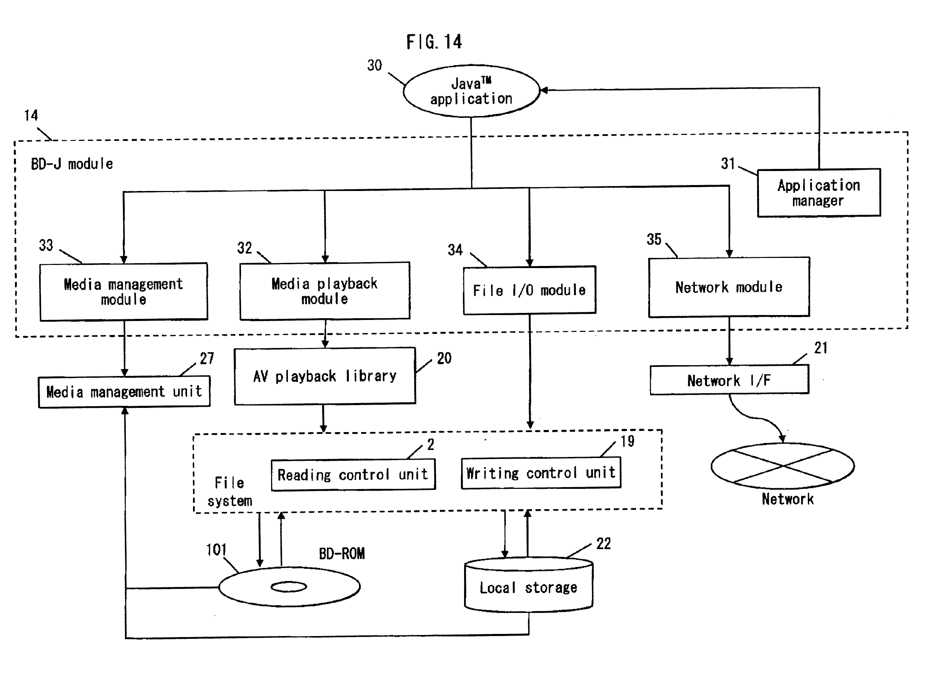

Next, the details of the BD-J module 14 are described. FIG. 14 shows the more detail structure of the BD-J module 14 shown in FIG. 11. The BD-J module 14 includes an application manager 31, a media playback module 32, a media management module 33, a file I/O module 34, and a network module 35. Note that an AV playback library 20, a network interface 21, and a local storage 22 shown in FIG. 14 are the same as those shown in FIG. 11, and these are described for convenience in explaining the BD-J module 14.

The application manager 31 manages start-up and termination of a Java^{™} application based on an application management table corresponding to a current title notified by the mode management module 16. The application manager 31 also performs processing of passing a UO event received from the dispatcher 17 to a Java^{™} application 30 in execution.

The media playback module 32 supplies an API for media playback control to the Java^{™} application 30. When the Java^{™} application 30 calls the API for media playback control, the media playback module 32 calls a function of the AV playback library 20 corresponding to the called API, to perform AV playback control.

The media management module 33 manages the status indicating whether a storage medium as the BD-ROM disc and the local storage 22 are inserted. The media management module 33 supplies an API for medium status management to the Java^{™} application 30. When the Java^{™} application 30 calls the API for medium status management, the media playback module 33 refers to the media management unit 27 to notify the Java^{™} application 30 of the medium status.

The network module 35 supplies an API for network control to the Java^{™} application 30. In accordance with a network control request from the Java^{™} application 30, the network module 35 performs network connection via the network interface 21. The Java^{™} application 30 can access the server with use of the network module 35, in order to search for a released movie work and an additional content, download the movie work or additional content searched for, and perform user authentication.

The file I/O module 34 performs processing relating to a file access request by the Java^{™} application 30 to media such as a BD-ROM, a local storage, and a recordable BD drive.

This completes the detailed description of the BD-J module 14.

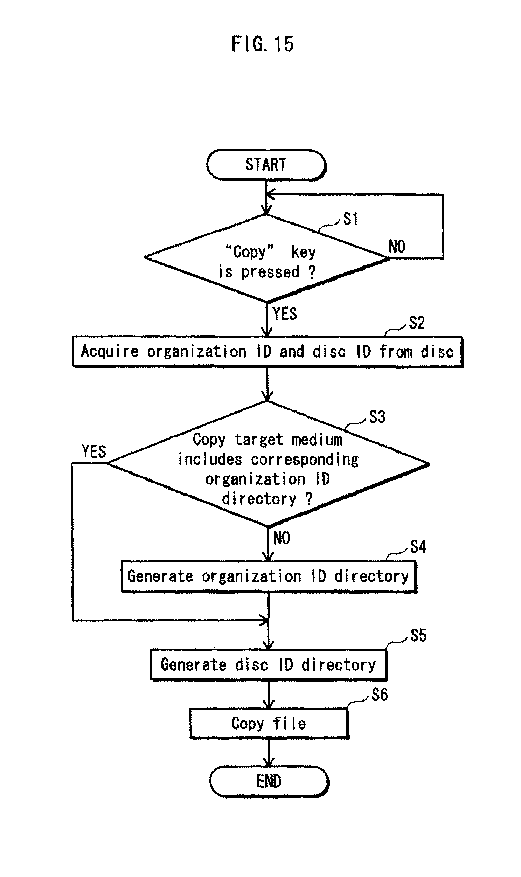

Next, description is given of how the playback device 200 according to the present embodiment performs characteristic processing. First description is given of a procedure of recording processing of storing a movie work stored on a BD-ROM disc on the local storage 22, with reference to FIG. 15.

When a user presses a "movie work copy" key provided in the remote control 300, the playback device 200 starts recording processing. When receiving a notification of press of the "movie work copy" key (Step S1: Yes), the recording unit 28 reads an index.bdmv file from a BD-ROM disc inserted into the drive to acquire to an organization ID and a disc ID indicated in the read index.bdmv file (Step S2). The recording unit 28 searches the movie work saving region (BDROOT) in the local storage 22 for an organization ID directory whose name identified by the organization ID acquired in Step S2 (Step S3). When the organization ID directory is not found (Step S3: No), the recording unit 28 generates a new organization ID directory (Step S4). Furthermore, the recording unit 28 generates a disc ID directory whose name is identified by the disc ID acquired in Step S2, as a subdirectory of the organization ID directory (Step S5). Then, the recording unit 28 copies each file constituting the movie work stored on the BD-ROM disc to the disc ID directory generated in Step S5 in the format compliant with the BD-ROM standard (Step S6). In this procedure, the movie work is stored on the local storage 22.

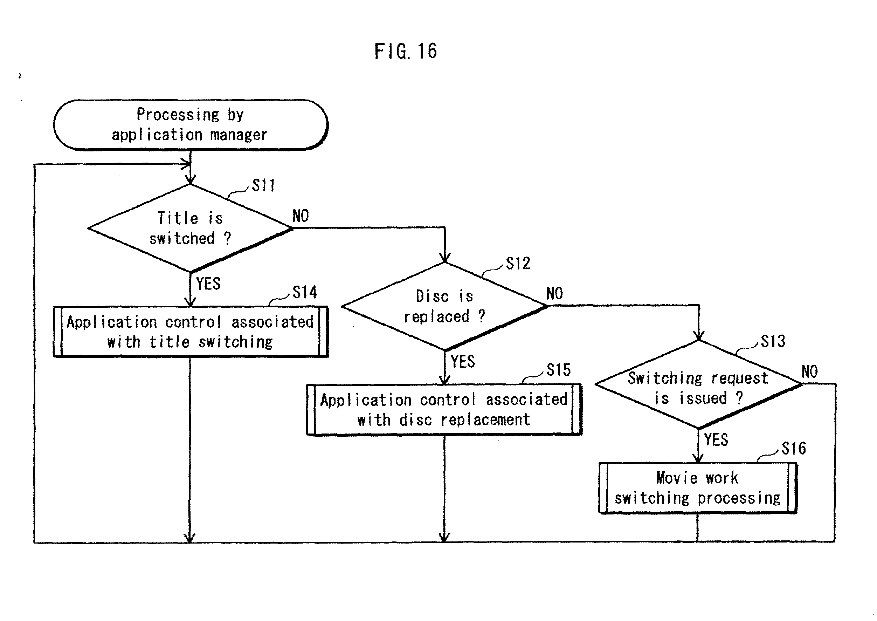

Next, with regard to application synchronized playback in the playback device 200, description is given of application control performed by the application manager 31, with reference to FIGs. 16 to 22.

As shown in FIG. 16, the application manager 31 performs application control in a different manner (Steps S14, 15, and 16) respectively corresponding to the following cases: a case where notification of switching of playback title is received from the mode management module 16 during execution of an application (Step S11: Yes), a case where notification of replacement of BD-ROM disc is received from the media management module 33 during execution of the application (Step S12: Yes), and a case where notification of issuance of a movie work switching request is received from the mode management module 16 during execution of the application (Step S13: Yes).

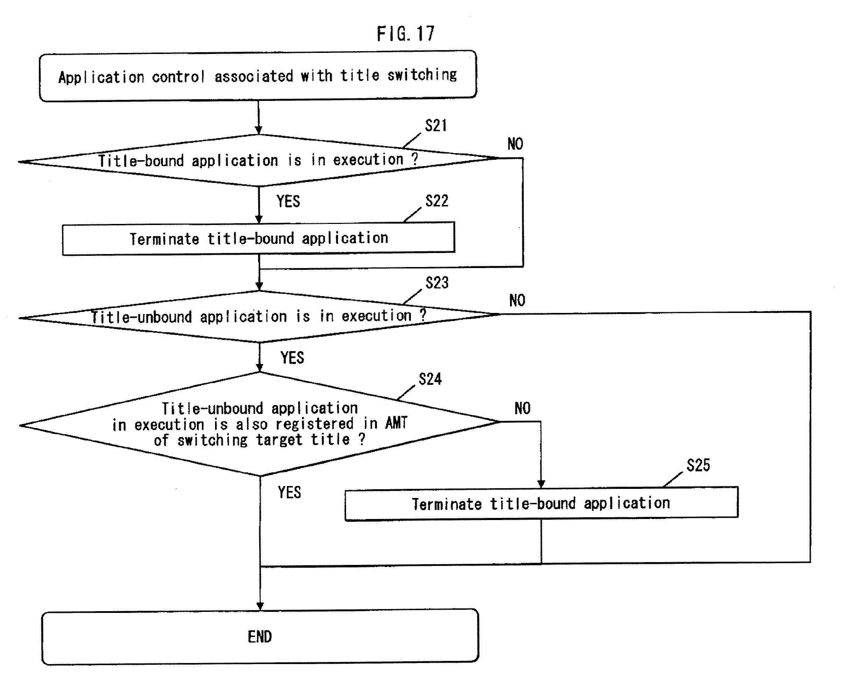

Firstly, detail description is given of the application control associated with title switching in Step S14, with reference to FIG. 17. Upon receiving notification of title switching, the application manager 31 performs control on the operations of a title-bound application and a title-unbound application. Firstly, the application manager 31 checks whether any title-bound application is in execution (Step S21). If a title-bound application is in execution, the application manager 31 terminates the title-bound application in execution (Step S22). Next, the application manager 31 checks whether any title-unbound application is in execution (Step S23). If a title-unbound application is in execution, the application manager 31 checks whether an application, which is the same as the title-unbound application in execution, is registered in an BD-J object of a title that is a switching target (Step S24). If the same application is not registered, the application manager 31 terminates the title-unbound application in execution (Step S25). The processing in Steps S21 to S22 may be performed in parallel with the processing in Steps S23 to S25, or may be performed after the processing in Steps S23 to S25.

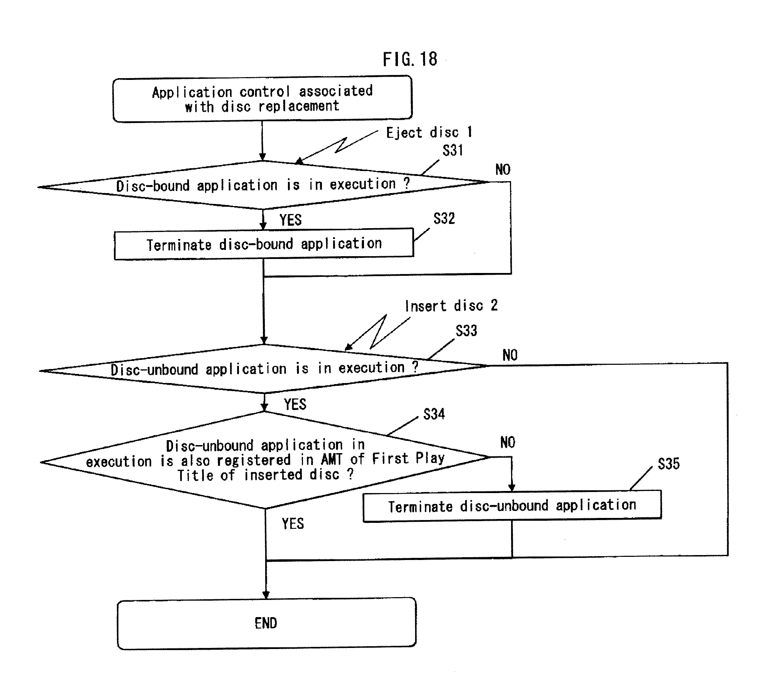

Next, the application control associated with disc replacement in Step S15 in FIG. 16 is described in detail, with reference to FIG. 18. Upon receiving notification of title switching, the application manager 31 performs control on the operations of a disc-bound application and a disc-unbound application. The application manager 31 receives notification of disc ejection from the media management module 33, and checks whether any disc-bound application is in execution (Step S31). If a disc-bound application is in execution, the application manager 31 terminates the disc-bound application (Step S32). Next, when a new disc is inserted, the application manager 31 receives notification of disc insertion from the media management module 33, and checks whether any disc-unbound application is in execution (Step S33). If a disc-unbound application is in execution, the application manager 31 checks whether an application, which is the same as the disc-unbound application in execution, is registered in an application management table of a First Play title in the newly inserted disc (Step S34). If the same application is not registered, the application manager 31 terminates the disc-unbound application in execution (Step S35). The processing in Steps S31 to S32 may be performed in parallel with the processing in Steps S33 to S35, or may be performed after the processing in Steps S33 to S35.

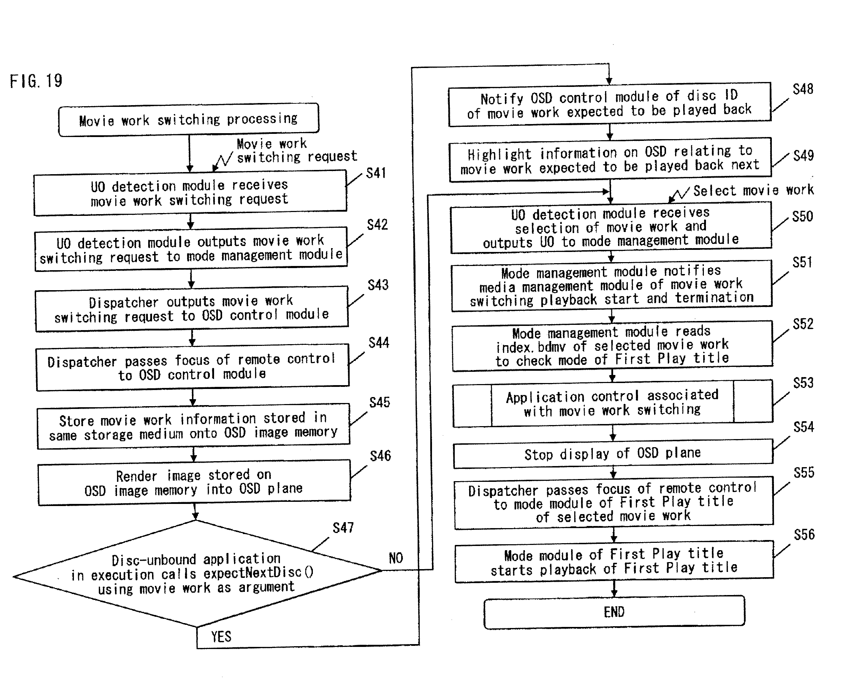

Next, detail description is given of the processing in Step S16 in FIG. 16 which is performed upon reception of notification of issuance of a movie work switching request, with reference to FIG. 19.

According to the conventional BD-ROM standard, by detecting the status change of a medium between ejection and insertion of the medium, control is performed on a disc-bound application and a disc-unbound application each whose life cycle is defined in the time axis of the whole disc. In the present embodiment, when a plurality of movie works are stored on a single storage medium, a "movie work switching request" is received from a user in order to switch a playback target from a movie work to another movie work that are stored on the same storage medium with no status change between ejection and insertion of the storage medium. FIG. 19 also shows a unit for the playback device 200 to receive a movie work switching request from a user.

When the user presses a "movie work switching" key 301 provided in the remote control, the UO detection module 15 receives a movie work switching request (Step S41). In the present embodiment, the description is given based on the assumption that the remote control includes the "movie work switching" key. Alternatively, the following may be employed. When the user presses a menu key such as a "SETUP" key and a "FUNCTION" key for displaying and selecting the settings and functions of the playback device, a menu is displayed on the OSD plane. This menu includes an item of "movie work switching". When the user selects this item, a movie work switching request is issued to the playback device.

The UO detection module 15 outputs the movie work switching request to the mode management module 16 (Step S42). The dispatcher of the mode management module 16 outputs the movie work switching request to the OSD control module 24 (Step S43), and passes focus of the remote control, which has been held in another mode module, to the OSD control module 24 (Step S44). The focus of the remote control represents the top priority right to receive UO for common use in all mode modules such as the up, down, left, and right arrow keys and the determination key. When the mode management module 16 receives UO for common use, the dispatcher outputs the received UO to a module that has holds therein the focus of the remote control.

In order to provide a screen for providing the user with list information of selectable movie works, the OSD control module 24 controls the reading control unit 2 to acquire information of a movie work from the local storage 22, stores the acquired information on the OSD image memory (Step S45), and renders the information into the OSD plane 23 for display on the screen (Step S46). Here, the information of the movie work stored on the local storage 22 includes meta information defined in the BD-ROM standard such as a name of the movie work and a thumbnail image stored on the META directory located directly under the BDMV directory, and information such as a name of a movie work, a thumbnail image, and a recording time period saved in the movie work saving region, its subordinate, or other regions. When the information of the movie work is not an image but character information, the OSD control module 24 writes the information of the movie work into the OSD plane 23 by a font image held in the OSD image memory 25 for OSD display in the playback device.

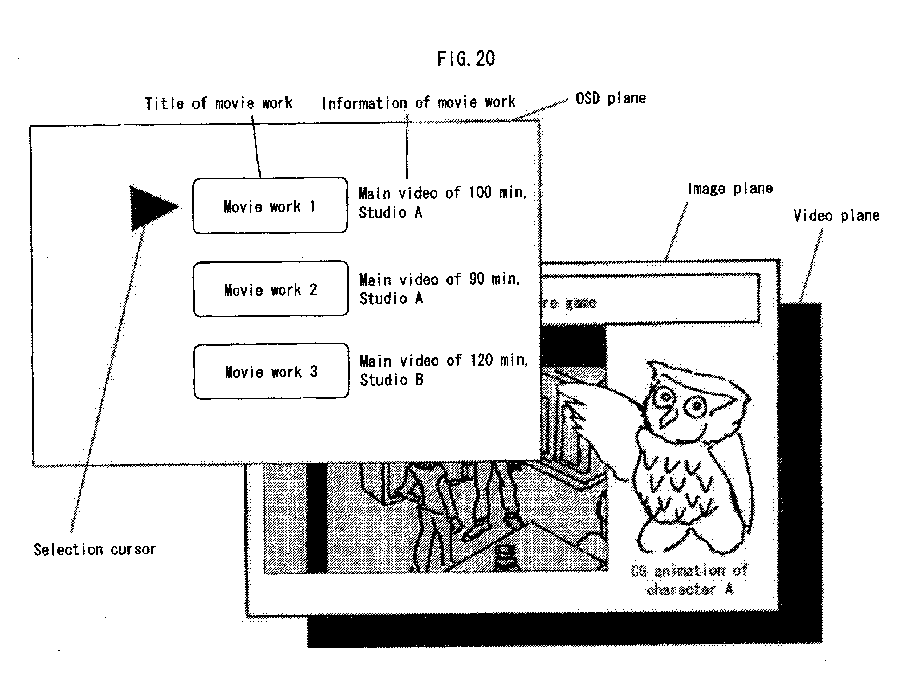

FIG. 20 shows the hierarchical relation among an OSD plane onto which a movie work switching screen is rendered, is overlaid with a video plane and an image plane. As shown in FIG. 20, when the user watches a TV, the OSD plane, onto which the movie work switching screen is rendered, is presented in the foreground to the user.

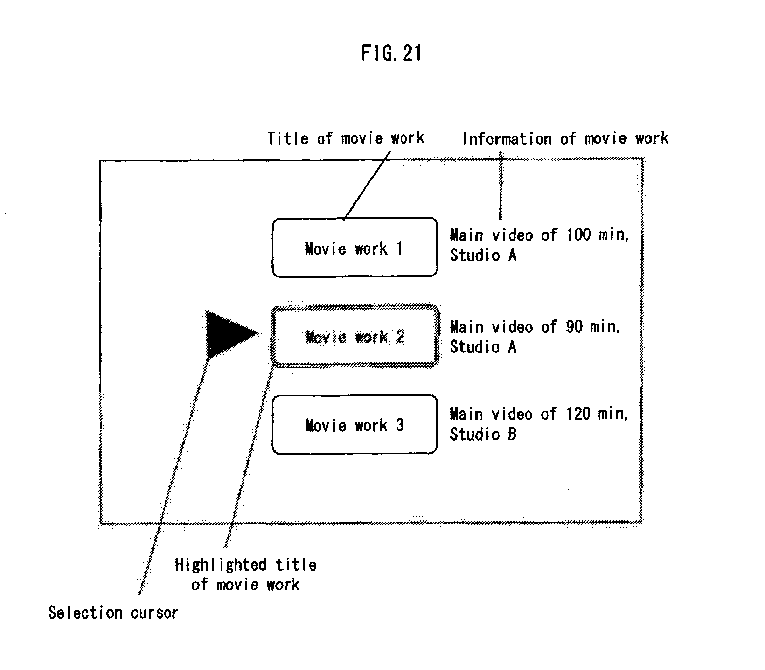

The disc-bound application calls expectNextDisc(), which is one of APIs for status management supplied by the media management module 33, using a disc ID of the movie work as an argument. This enables to notify the playback device 200 of that a movie work expected to be played back next. When a disc-unbound application is in execution in a title currently played back of a movie work that is a switching source and the disc-unbound application calls expectNextDisc() using a disc ID of a movie work as an argument (Step S47: Yes), the media management module 33 notifies the OSD control module 24 of an organization ID of the movie work that is the switching source and the disc ID used as the argument (Step S48). The OSD control module 24 highlights a part relating to a movie work identified by the organization ID and the disc ID in the list information of selectable movie works (Step S49). FIG. 21 shows an example of screen display where a part relating to the movie work 2 is highlighted. In addition to the highlighting, a selection cursor is pointed to the movie work 2 in advance. This saves the effort of the user to search for a movie work to be selected next, thereby realizing smooth switching between movie works.

The user operates the remote control while watching the movie work switching screen displayed on the TV, selects a movie work that is a switching target, and determines to play back the selected movie work. In response to this, the UO detection module 15 receives UO for selecting the movie work to be switched, and outputs the received UO to the mode management module 16 (Step S50).

In order to start playing back a First Play title of the movie work that is the switching target, it is necessary to terminate the title currently played back of the movie work that is the switching source. Accordingly, the mode management module 16 outputs, to the media management module 33, a playback termination notification of the movie work that is the switching source and a playback start notification of the movie work that is the switching target (Step S51). In order to switch a movie work to be played back with no medium status change between ejection and insertion of the storage medium, upon receiving the playback termination notification and the playback start notification, the media management module 33 performs processing in the same way as in the case of reception of the medium status change notification of ejection and insertion of the BD-ROM disc from the media management unit 27.

After outputting the playback termination notification and the playback start notification to the media management module 33, the mode management module 16 designates a BDMV directory having stored thereon the movie work that is the switching target as a new current directory, and controls the reading control unit 2 to read an index.bdmv file of the movie work that is switching target, and checks a mode of the First Play title of the switching target (Step S52), to perform application control associated with movie work switching (Step S53).

When the application control on the movie work that is the switching source ends, the OSD control module 24 stops display of the OSD plane into which the movie work switching screen has been written (Step S54). The dispatcher passes the focus of the remote control to a mode module of the First Play title of the movie work that is the switching target (Step S55). Then, the mode module of the First Play title of the movie work that is the switching target starts playing back the First Play title (Step S56). This completes switching between the movie works stored on the local storage 22.

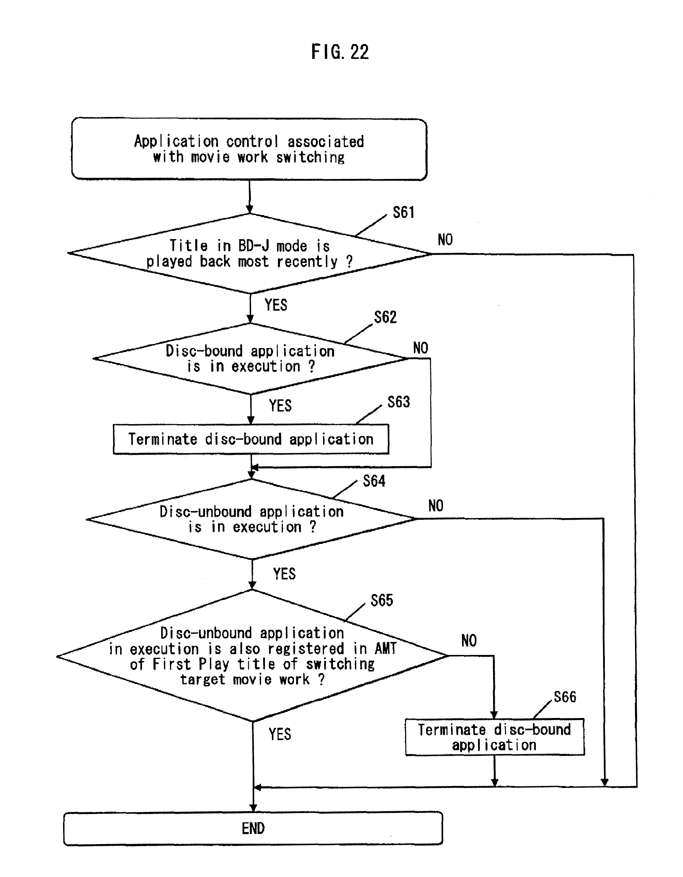

Here, the application control associated with movie work switching in Step S53 is described in detail, with reference to FIG. 22.

In the application control associated with movie work switching, the mode management module 16 checks whether a title currently played back, that is, a title played back most recently in the movie work that is the switching source, is in the BD-J mode (Step S61). If the title currently played back is not in the BD-J mode title, the application does not operate. Accordingly, processing relating to application control is not performed. If the title currently played back is in the BD-J mode title, the media management module 33 outputs, to the application manager 31, a notification that is the same as the notification of disc ejection and insertion. Upon receiving the notification, the application manager 31 checks whether any disc-bound application is in execution (Step S62). If a disc-bound application is in execution, the application manager 31 terminates the disc-bound application (Step S63). Next, the application manager 31 checks whether any disc-unbound application is in execution (Step S64). If a disc-unbound application is in execution, the application manager 31 checks whether an application management table of the disc-unbound application is registered in the First Play title of the movie work that is the switching target (Step S65). If the application management table is not registered, the application manager 31 terminates the disc-unbound application (Step S156).

The switching between a plurality of movie works stored on the local storage 22 has been described so far. Assume that although the user once tries to switch a playback target from a movie work to another movie work, the user does not select the other movie work on the movie work switching screen and cancels the movie work switching. In such a case, the following processing is performed.

The movie work switching is cancelled in response to reception of UO of returning to the movie work that is the switching source without switching to the movie work that is the switching target. For example, the user cancels movie work switching by pressing a "RETURN" key of the remote control for cancelling the most recent operation, or by re-selecting, on the movie work switching screen, the movie work that has been played back most recently.

When a movie work switching request is received, the movie work switching screen is displayed. Upon receiving an UO of canceling movie work switching, the UO detection module 15 outputs cancellation of the movie work switching to the mode management module 16. The dispatcher outputs the movie work switching request to the OSD control module 24. The OSD control module 24 stops display of the OSD plane into which the movie work switching screen has been written. The dispatcher passes the focus of the remote control to the mode module of the title that is being played back of the movie work that is the switching source. The cancellation of the movie work switching completes by returning the status of the medium to the status where the movie work that is the switching source has been played back.

This completes the detailed description of the processing associated with movie work switching.

The following describes the effect of the switching function of switching between movie works relating to the present embodiment, by comparing with a conventional art (Japanese Patent Publication No. 2006-27189). Description is given of two cases of movie work switching during playback of the title #1 of the movie work 1 as a scenario. One is a case where the playback target is switched to another movie work which relates to the movie work 1. The other is a case where the playback target is switched to another movie work which does not relate to the movie work 1.

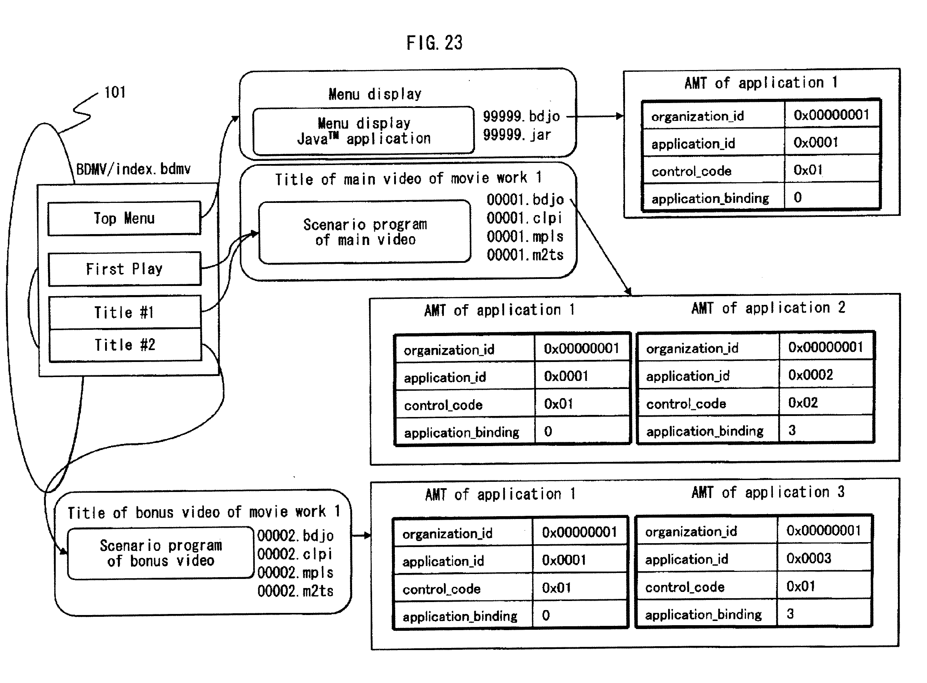

Firstly, description is given of replacement between a plurality of BD-ROMs according to the conventional art, with reference to FIGs. 23 to 25.

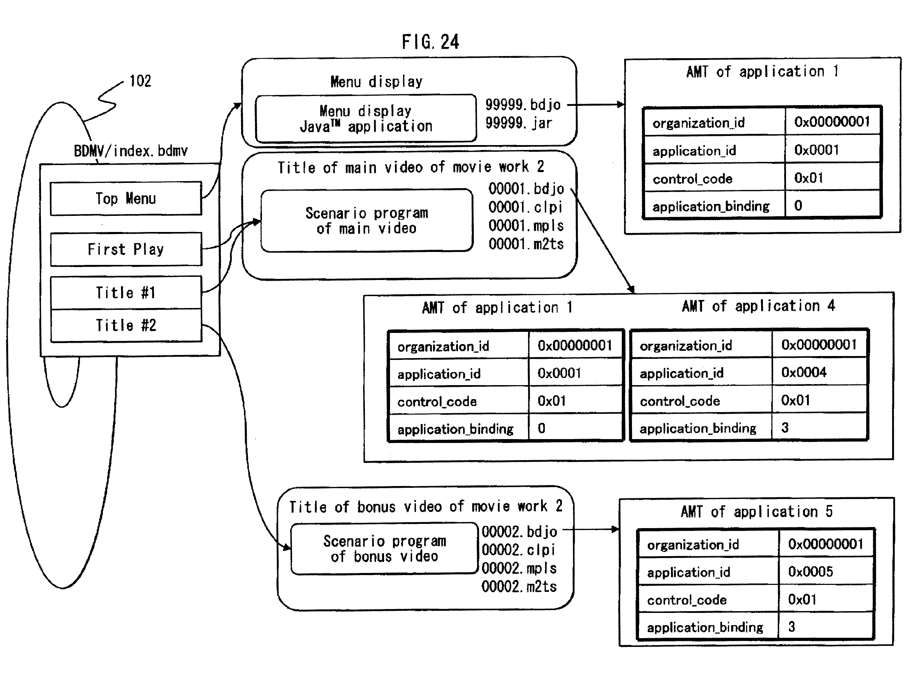

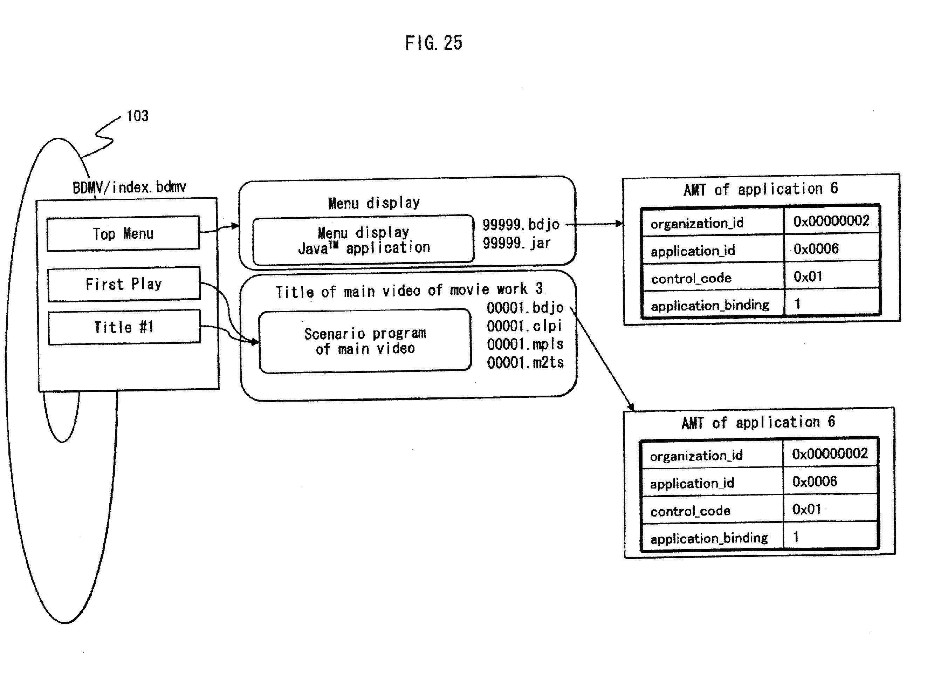

FIG. 23 shows the title structure, the application structure, and application management tables (AMTs) with respect to the BD-ROM disc 101 on which the movie work 1 is stored. FIG. 24 shows the title structure, the application structure, and application management tables (AMTs) with respect to the BD-ROM disc 102 on which a movie work 2 is stored. FIG. 25 shows the title structure, the application structure, and application management tables (AMTs) with respect to the BD-ROM disc 103 on which a movie work 3 is stored.

The movie works 1 and 2 belong to the same series, and correlate to each other, and also contain a disc-unbound application 1 for menu. The movie work 3 has no correlation to the movie work 1 and 2, and does not contain the application 1.

Firstly, description is given of examples of the user operations and operations of the playback device 200 in case of replacement of the disc 101 with the disc 102 during playback of the title #1 in the disc 101, as an example of replacement between discs on which movie works that correlate to each other are stored.

When the user ejects the disc 101 during playback of the title #1 in the disc 101, the playback device 200 terminates the disc-bound application 2 in execution and AV playback. When the user inserts the disc 102, the playback device 200 reads a First Play title in the disc 102 to detect that the AMT of the disc-unbound application 1 in execution is registered in a First Play title in the disc 102. Here, the application 1 that has been executed in the disc 101 that is the replacement source continues to be executed also in the disc 102 that is the replacement target, without being terminated. The playback device 200 starts up an application 4 having the attribute AUTOSTART registered in the First Play title in the disc 102, and starts AV playback. This completes the replacement with the disc 102.

Next, description is given of examples of the user operations and operations of the playback device 200 in case of replacement of the disc 101 with the disc 103 during playback of the title #1 in the disc 101, as an example of replacement between discs on which movie works that do not correlate to each other are stored.

When the user ejects the disc 101 during playback of the title #1 in the disc 101, the playback device 200 terminates the disc-bound application 2 in execution and AV playback. When the user inserts the disc 103, the playback device 200 reads a First Play title in the disc 103 to detect that the AMT of the disc-unbound application 1 in execution is not registered in the First Play title in the disc 103, and terminates the disc-unbound application 1. The playback device 200 starts up an application 6 having the attribute AUTOSTART registered in the First Play title in the disc 103, and starts AV playback. This completes replacement with the disc 103.

This completes the description of the operation examples of replacement between a plurality of BD-ROM discs according to the conventional art.

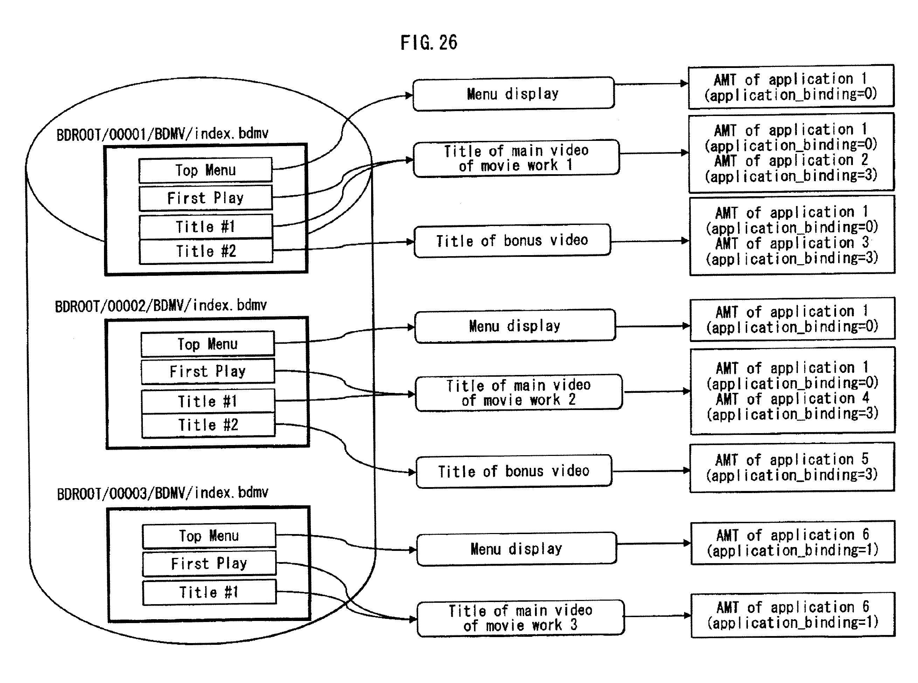

Next, description is given of switching between movie works stored on the local storage 22 described in the present embodiment, with reference to FIGs. 26 to 28.

FIG. 26 shows the title structure, the application structure, and AMTs with respect to a storage medium on which the movie works 1 to 3 are stored. The title structures and the application structures of the movie works and the AMTs of the movie works 1 to 3 are the same as those stored on the BD-ROM discs shown in FIGs. 23 to 25, respectively.

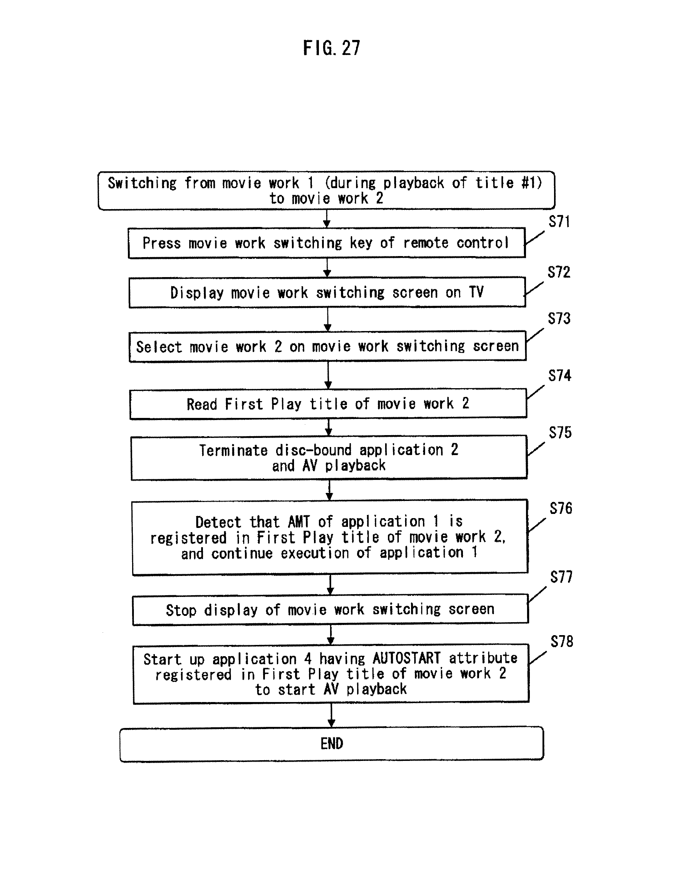

FIG. 27 is a flow chart showing the user operations and control by the playback device 200 in case of switching from the movie work 1 to the movie work 2 during playback of the title #1 of the movie work 1.

When the user presses a movie work switching key during playback of the title #1 of the movie work I (Step S71), the playback device 200 displays the movie work switching screen on the TV (Step S72). The user selects the movie work 2 in accordance with the display on the movie work switching screen (Step S73). Here, if the application 1, which executes the title #1 of the movie work 1, calls expectNextDisc() using a disc ID of the movie work 2 as an argument, information of a movie work expected to be played back next is highlighted on a list of movie works displayed on the movie work switching screen. This makes the user to easily search for the movie work 2 in accordance with the display on the screen. When the movie work 2 is selected, the playback device 200 reads the First Play title of the movie work 2 (Step S74), and terminates the disc-bound application 2 in execution and AV playback (Step S75). The playback device 200 detects that the AMT of the disc-unbound application 1 in execution is registered in the First Play title of the movie work 2 (Step S76). Here, the application 1, which has been executed in the movie work 1 that is the switching source, continues to be executed also in the movie work 2 that is the switching target, without being terminated. The playback device 200 stops displaying the movie work switching screen (Step S77), and starts up the application 4 having the attribute AUTOSTART registered in the First Play title of the movie work 2, and starts AV playback (Step S78). This completes switching to the movie work 2.

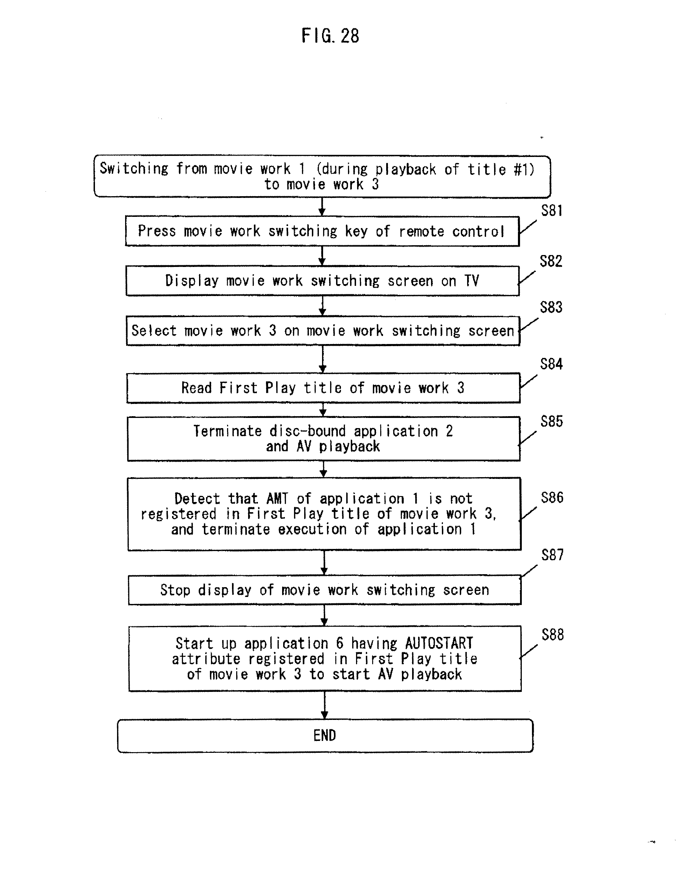

FIG. 28 is a flow chart showing the user operations and control by the playback device 200 in case of switching from the movie work 1 to the movie work 3 during playback of the title #1 of the movie work 1.

When the user presses the movie work switching key during playback of the title #1 of the movie work I (Step S81), the playback device 200 displays the movie work switching screen on the TV (Step S82). The user selects the movie work 3 in accordance with the display on the movie work switching screen (Step S83). When the movie work 3 is selected, the playback device 200 reads a First Play title of the movie work 3 (Step S84), and terminates the disc-bound application 2 in execution and AV playback (Step S85). The playback device 200 stops displaying the movie work switching screen (Step S87), and starts up the application 6 having the attribute AUTOSTART registered in the First Play title of the movie work 3, and starts AV playback (Step S88). This completes switching to the movie work 3.

This completes the description of the operation examples of switching between movie works stored on the local storage 22 described in the present embodiment.

According to the present embodiment as described above, the user can watch a plurality of movie works stored on a storage medium by switching between the movie works. The playback device 200 can control applications in the movie works stored on the storage medium, in the same way as in the case where applications operate on a BD-ROM disc. With this switching function, the playback device can perform switching between movie works in an unremovable built-in medium, which is equivalent to replacement between BD-ROM discs on which the movie works are stored. Also, assume, for example, that a plurality of movie works belong to the same series and correlate to each other, an unbound application calls expectNextDisc() to notify the playback device 200 of a disc ID of the movie work 2, which is expected to be played back next and is stored on the same storage medium on which a movie work that is currently played back. In such a case, the playback device 200 highlights a disc expected to be played back next on the movie work switching screen for presentation to the user. This enables the user to continuously watch the correlated movie works without no effort of searching a plurality of BD-ROMs for one that is to be inserted next. Therefore, in the case where a plurality of movie works stored on a storage medium are played back, it is possible to perform application control in the same way as in the case where movie works stored on a plurality of respective BD-ROMs are played back. Also, collective recording of correlated works in a single storage medium increases user's convenience.

### (Second Embodiment)

In the first embodiment, switching of playback target between movie works is performed in response to a movie work switching request issued via user operations using the remote control. In the second embodiment, description is given of the structure where an application, which operates during playback of a title of a movie work that is a switching source, issues a movie work switching request.

Hereinafter, the structure in the second embodiment that is the same as that in the first embodiment is omitted. Only the structure different from that in the first embodiment is described.

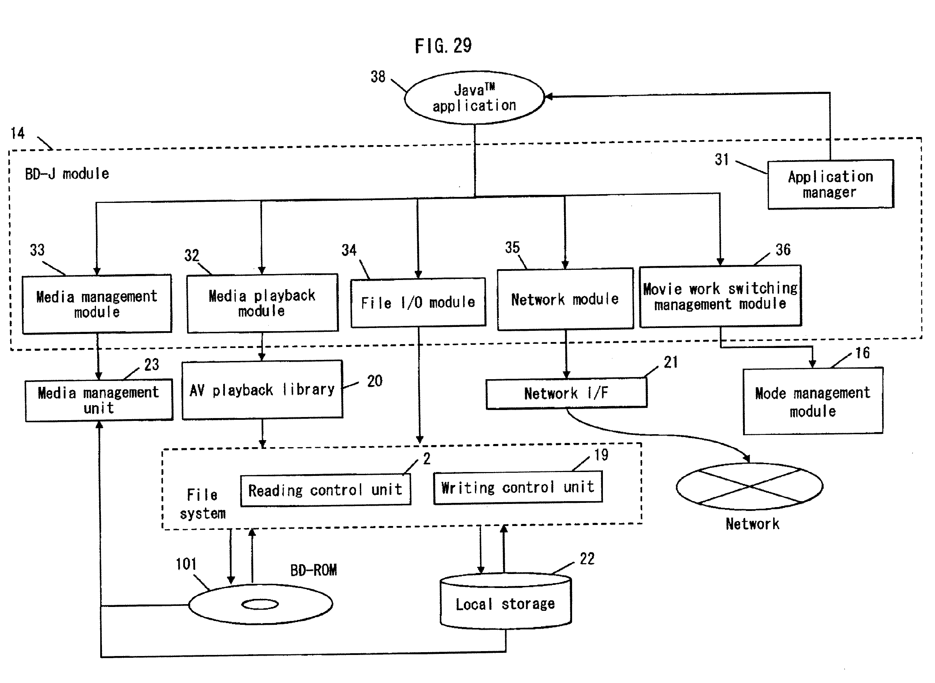

FIG. 29 shows the detail structure of the BD-J module in the case where an application issues a movie work switching request. FIG. 29 shows the structure that is the same as that shown in FIG. 14 except addition of a movie work switching management module 36. Other compositional elements are shown for convenience in explaining the movie work switching management module 36. The movie work switching management module 36 supplies an API for an application to issue a movie work switching request. When this API is called, a movie work switching request is output to the mode management module 16.

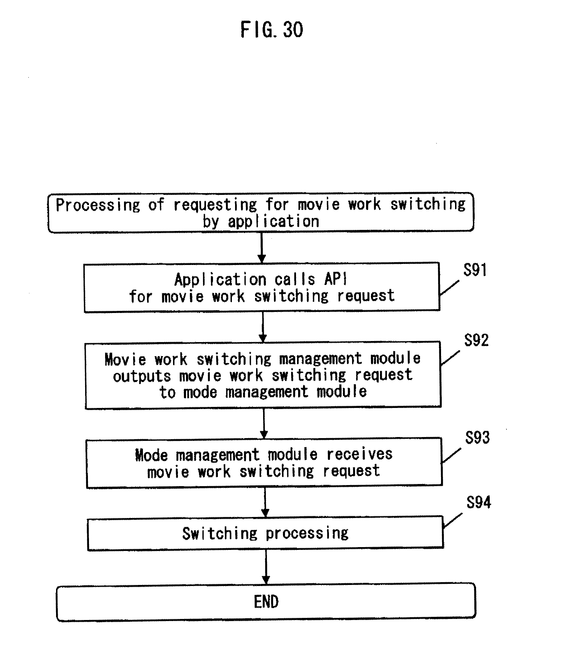

FIG. 30 is a flow chart showing a procedure of processing in the case where an application in execution issues a movie work switching request. When an application in execution calls an API for a movie work switching request (Step S91), the movie work switching management module 36 outputs a movie work switching request to the mode management module 16 (Step S92).

Upon receiving the movie work switching request via the API called by the application (Step S93), the mode management module 16 performs switching processing (Step S94) that is the same as the processing relating to movie work switching request using UO in Steps S43 to S56 shown in FIG. 19. As a result, the movie work switching screen is displayed without any user operations, and a movie work that is a switching target is selected by the user, and then control on disc-bound application is performed.

According to the second embodiment as described above, a movie work switching request can be issued by a content of a movie work. This can omit a user operation of pressing the movie work switching key. Applications are structured in the following manner. For example, when playback of a title, which constitutes a main video of a movie work belonging to a series, completes, or when a scene, which is not contained in the movie work, needs to be played back during playback of the title, an application whose life cycle belongs to the title calls an API for movie work switching request. Such a structure enables display of the movie work switching screen without any user operations. Accordingly, it is possible to encourage the user to perform disc replacement, movie work switching, and so on.

### (Third Embodiment)

In the second embodiment, an application in execution issues a movie work switching request. However, on the movie work switching screen displayed in response to the issuance of the movie work switching request, a user instruction is necessary for selecting a movie work that is a switching target. In the third embodiment, no UO is necessary for selecting a movie work that is a switching target. Hereinafter, the structure in the third embodiment that is the same as those in the first and second embodiments is omitted. Only the structure different from those in the first and second embodiments is described.

In the third embodiment, the movie work switching management module 36 supplies an API for movie work selection, which is for an application to select a movie work and switch to the selected movie work. The API for movie work selection receives a disc ID of a movie work that is a switching target as an argument. When this API is called, it is checked as to whether a movie work, which is identified by an organization ID of a movie work that is played back and the disc ID designated as the argument, is stored on the storage medium. If the identified movie work is stored on the storage medium, a movie work selection notification is output to the media management module 33, and processing is performed of selecting a movie work and switching to the selected movie work. If the movie work, which is identified by the organization ID of the movie work that is played back and the disc ID designated as the argument, is not stored on the storage medium, a switching failure notification is output to the application which has called the API.

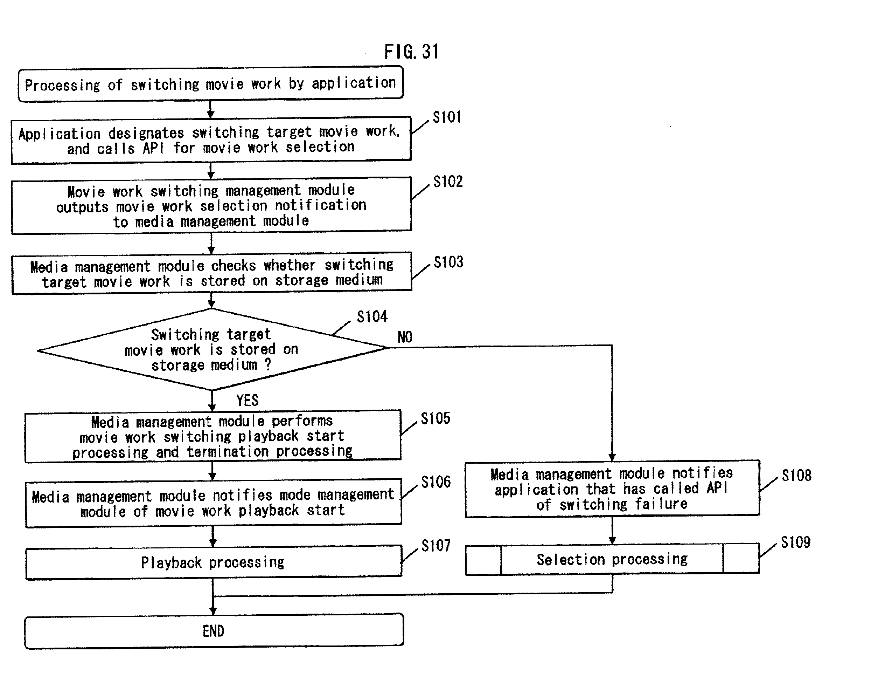

FIG. 31 is a flow chart showing a procedure of processing of selecting a movie work and switching to the selected movie work by an application in execution.

When an application in execution calls an API for movie work selection using a disc ID of a movie work that is a switching target as an argument (Step S101), the movie work switching management module 36 outputs a movie work selection notification to the media management module 33 (Step S102). Upon receiving the movie work switching notification, the media management module 33 checks whether a movie work, which is identified by an organization ID of a movie work that is played back and a disc ID designated as the argument, is stored on the storage medium (Step S103). If the identified movie work is stored (Step S104: Yes), the media management module 33 performs movie work switching playback start processing (Step S105) and movie work switching playback termination processing (Step S107). In the movie work switching playback start processing (Step S105) and movie work switching playback termination processing (Step S107) in FIG. 31, processing is performed in the same way as the processing performed by the media management module 33, which has received the playback termination notification and the playback start notification in Step S51 in FIG. 19. The processing is also the same as the processing in the case of reception of the medium status change notification of ejection and insertion of the BD-ROM disc from the media management unit 27. In this processing, the media management module 33 outputs a movie work playback start notification to the mode management module 16 in order to start playing back the movie work that is switching target (Step S106). Upon receiving the movie work playback start notification, the mode management module 16 checks a mode of a First Play title of the movie work that is the switching target. Subsequently, in the same way as shown in Steps S53 to S56 in FIG. 19, playback processing of the movie work that is the switching target is performed (Step S107), which includes control on a disc-bound application.

On the other hand, if the movie work that is the switching target is not stored on the storage medium, the media management module 33 outputs a switching failure notification to the application that has called the API (Step S108). Here, it is necessary to cause the user to insert other storage medium on which the movie work that is the switching target is recorded, or select further another movie work. Accordingly, the application needs to display the movie work switching screen for user operations. If the user selects further another movie work, subsequent selection processing is performed in the same procedure as Steps S91 to S94.

According to the third embodiment as described above, all the operations of switching between movie works can be completely performed by a content, thereby omitting user operations of switching between movie works. This enables the playback device 200 to seamlessly play back a plurality of movie works belonging to the same series without any user operations.

### (Fourth Embodiment)

In the first and second embodiments, the playback device 200 displays the movie work switching screen in response to issuance of a movie work switching request. In the fourth embodiment, an application for movie work management stored on a storage medium displays the movie work switching screen. Hereinafter, the structure in the fourth embodiment that is the same as those in the first and second embodiments is omitted. Only the structure different from those in the first and second embodiments is described.

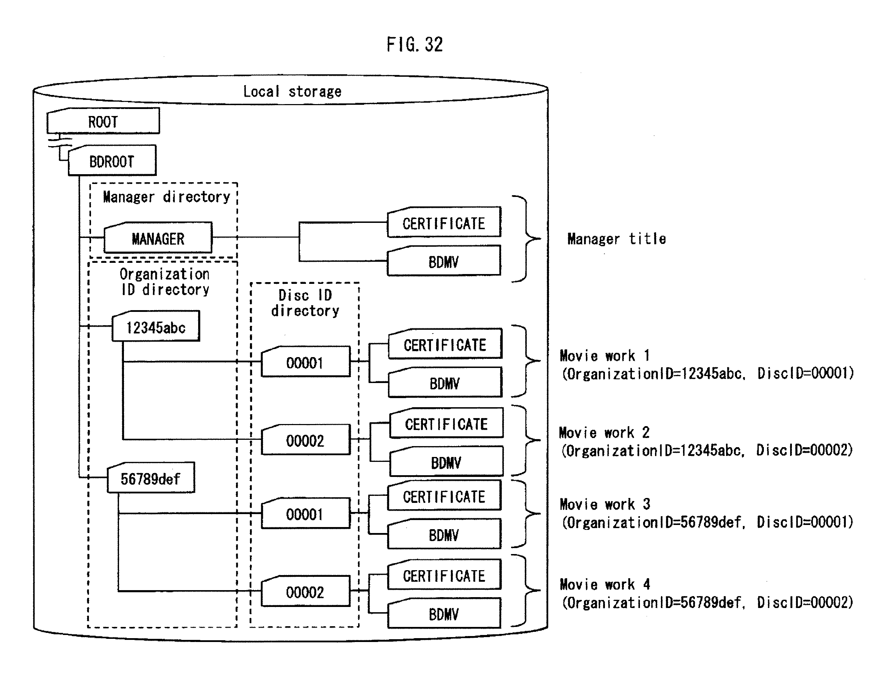

FIG. 32 shows the directory structure of a local storage according to the fourth embodiment. In the fourth embodiment, a MANAGER directory, in addition to an organization ID directory and a disc ID directory, is located as a subdirectory of a BDROOT directory. Under the MANAGER directory, data called "manager title" is stored. The manager title has the data structure compliant with the BD-ROM standard in the same way as other movie works.

When a movie work stored on the local storage is played back, the mode management module 16 firstly plays back this manager title so as to select a movie work based on the manager title and play back the selected movie work. In other words, a list of movie works stored on the local storage is displayed and any movie work is selected, not by an application incorporated into the playback device but by this manager title.

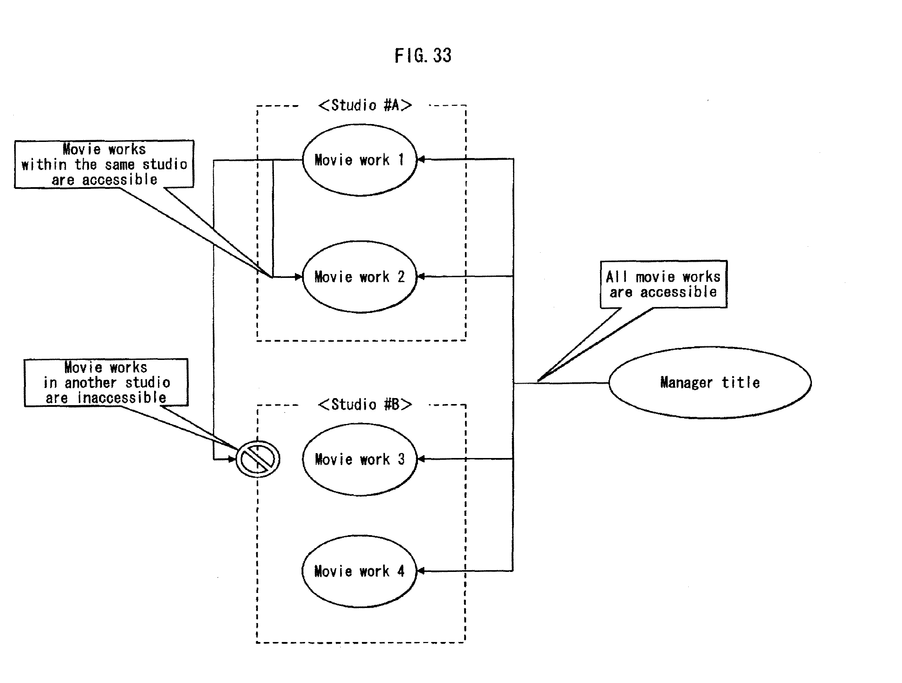

The following describes an access right assigned to an application for movie work management contained in a manager title. FIG. 33 shows the difference in access right between the manager title and a movie work. An application contained in a normal movie work is permitted to access a movie work within the same studio, and is prohibited from accessing a movie work in another studio. In other words, only with respect to movie works within the same studio, such an application of the normal movie work can display the list of movie works stored on the local storage, select, delete any movie work on the list, or the like. This is in order to prevent data of movie works in other studios from being collected, being deleted maliciously, and so on.

Compared with this, the manager title is permitted to access all movie works stored on the local storage, and is permitted to display a list of all movie works stored on the local storage, select, delete any movie work on the list, or the like. The manager title has assigned thereto an access right different from that assigned to an application contained in a normal movie work (privileged mode). Accordingly, it is possible to provide a function that is the same as the function of movie work switching performed by an application incorporated into the playback device.

This completes the description of the access right assigned to the application for movie work management contained in the manager title.

Next, the following describes judgment as to the type of access right in the playback device 200.

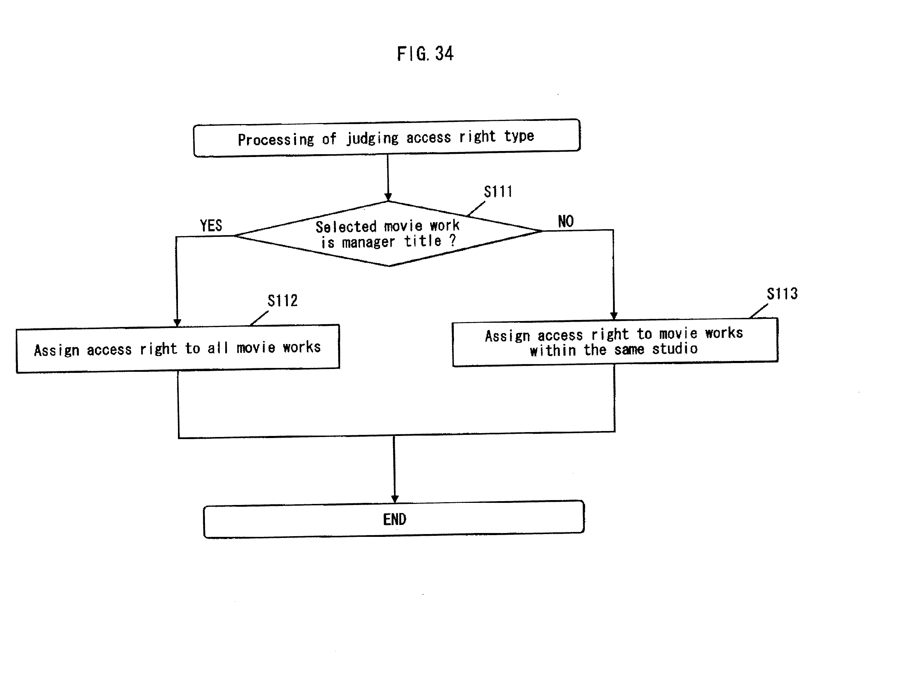

FIG. 34 is a flow chart showing a procedure of processing of access right type judgment processing performed in the playback device 200. The type of access right to be assigned differs depending on whether a selected movie work is a manager title. When a movie work is selected, it is judged as to whether the selected movie work is a manager title (Step S111). If the selected movie work is a manager title, an access right to all movie works is assigned to an application for movie work management contained in the manger title (Step S112). If the selected movie work is not a manager title and is a normal movie work, an access right to movie works within the same studio is assigned to an application contained in the movie work (Step S113). This completes the description of the judgment as to the type of access right in the playback device 200.

Next, description is given of a procedure of starting up the application for movie work management contained in the manager title, for displaying a list of movie works.

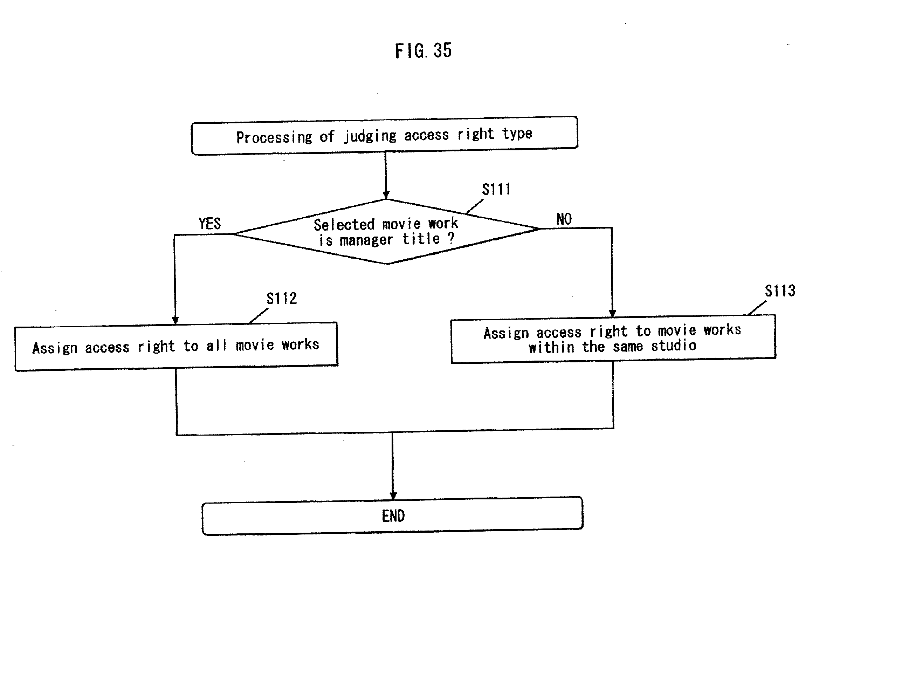

FIG. 35 is a flow chart showing a procedure of processing of displaying a list of movie works stored on a local storage. When a local storage is inserted into the playback device 200 and the user requests for display of a list of movie works stored on the local storage, the mode management module 16 checks whether any manager title is stored on the inserted local storage (Step S121). If a manager title is stored on the local storage, the mode management module 16 performs signature verification to judge whether the manager title is authentic (Step S122). The signature verification is performed by checking whether the manage title is provided by an authentic provider, based on a root certificate (discroot.crt) located under a CERTIFICATE directory. If a result of the judgment shows that the manage title is provided by an authentic provider (Step S123), the mode management module 16 designates the manager title as a current title. The mode management module 16 causes the title application manager 14 to start up the application for movie work management contained in the manager title to cause the application for movie work management contained in the manager title to manage the movie works stored on the local storage, such as display of the movie works stored on the local storage, and selection and deletion of a movie work on the list (Step S124).

In the case where a manager title is not stored on the local storage, if an application for movie work management has been incorporated beforehand into the playback device (Step S125), the mode management module 16 causes the application manager 14 to start up the application for movie work management incorporated into the playback device to display the list of the movie works stored in the local storage (Step S126). If an application for movie work management is not incorporated into the playback device, the mode management module 16 does not display the list of the movie works stored on the local storage, and designates any one of the movie works stored on the local storage as a current playback target, and starts playing back the designated movie work (Step S127).

With the above processing procedure, if a manager title is stored on a local storage, an application for movie work management contained in the manager title is started up, and display of a list of movie works stored on the local storage is realized by the application for movie work management.

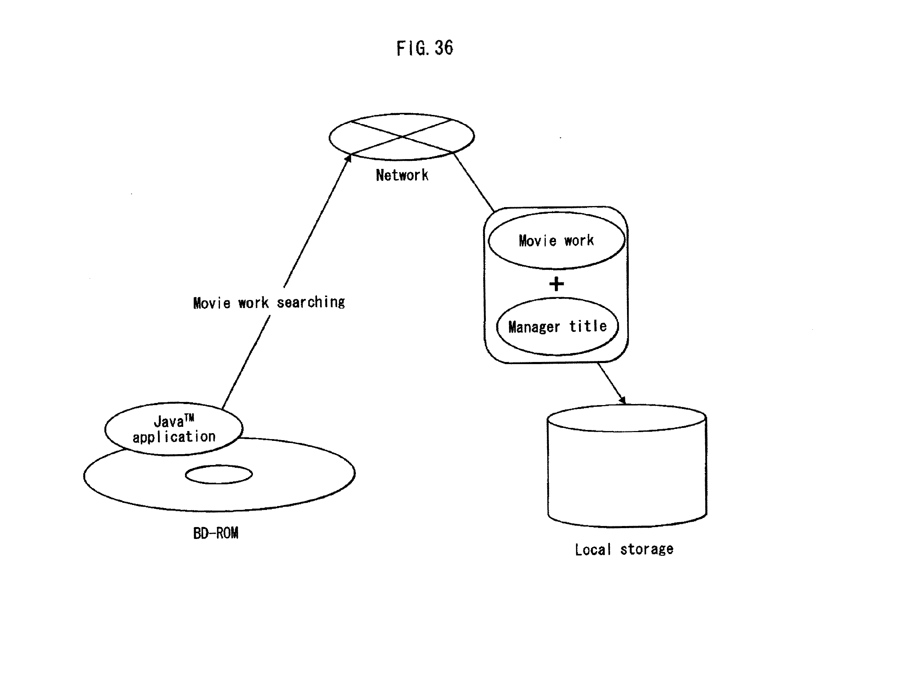

Next, description is given of a procedure of acquiring a manager title. FIG. 36 typically shows download of a movie work. A movie work is downloaded to a local storage by a Java™ application stored on a BD-ROM. Here, a manager title is provided on the server via the network together with a movie work. By downloading not only the movie work but also the manager title via the network, the manage title is stored on the local storage.

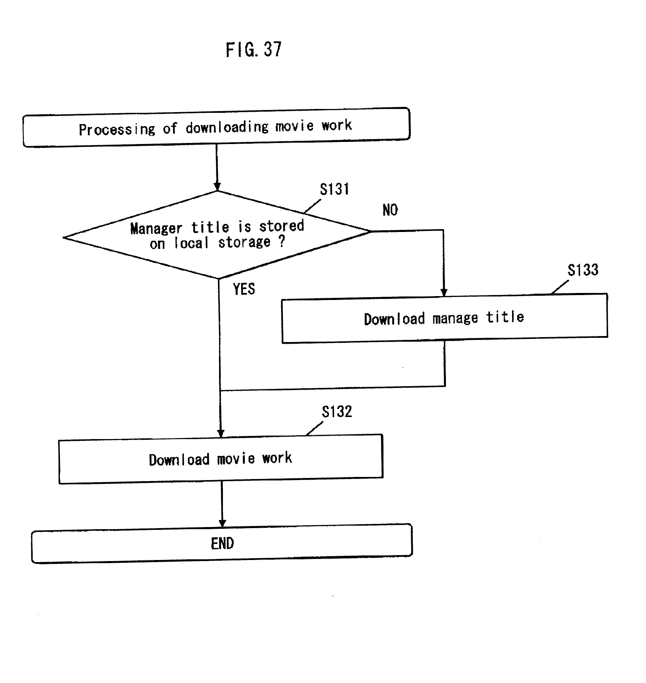

FIG. 37 is a flow chart showing a procedure of processing of downloading a movie work. In order to download a movie work, the Java^{™} application checks whether a manager title is stored on a local storage (Step S131). If a manager title has been already stored on the local storage, the Java^{™} application starts downloading the movie work (Step S132). If a manager title is not stored on the local storage, the Java^{™} application firstly downloads a manager title (Step S133), and then downloads the movie work.

Alternatively, the following may be possible even if a manager title is stored on the local storage. Comparison is made between a version of the manager title and a version of a manager title on the server. If the version of the manager title on the server is newer, the newer manager title is downloaded by overwriting the old manager title stored on the local storage with the new manager title.

According to the present embodiment as described above, an application for movie work management contained in a manager title stored on the storage medium can display the movie work switching screen. Accordingly, even in the case where the playback device does not include an OSD plane or does not include an OSD image memory having an insufficient capacity, it is possible to provide the user with the movie work switching screen.

### (Other Modifications)

(1) The present invention may be an application execution method disclosed in the procedure processing of the flow chart described in the above embodiments. Also, the present invention may be a computer program containing a program code for causing a computer to operate in accordance with the processing procedure, or a digital signal composed of the computer program. In the above embodiments, the control procedure described with reference to the flow charts and the control procedure performed by the functional compositional elements described in the above embodiments are specifically realized using hardware resources. Accordingly, these control procedures are each creation of a technical idea utilizing natural laws, and satisfy the conditional requirement of "invention of program".

Furthermore, the present invention may be the computer program or digital signal stored on a computer-readable storage medium such as a flexible disc, a hard disc, a CD-ROM, an MO, a DVD, a DVD-ROM, a DVD-RAM, a BD (Blu-ray Disc), and a semiconductor

Furthermore, the present invention may be the computer program or the digital signal transmitted via an electric communication network, a wireless or wired communication network, a network such as the Internet, data broadcasting, and the like.

Furthermore, the present invention may be implemented by another computer system, by transmitting the computer program or digital signal stored on the storage medium to the other computer system, or by transmitting the computer program or digital signal to the other computer system via the network.

(2) The present invention may be implemented as an LSI for controlling an application execution device. In such a case, it is desirable to structure, as a single system LSI, the compositional elements that are each mainly composed of logic elements among hardware constituting the playback device 200, except the compositional elements (BD drive and removable media drive) and the compositional elements mounted by a large-capacity memory (video plane, image plane, and OSD plane). Also, these functional blocks may be separately integrated into one chip, or integrated into one chip including part or all of them.

Also, although the system LSI is used here, the system LSI may be called an IC, an LSI, a super LSI, and an ultra LSI, depending on the integration degree.

Also, a method of forming integrated circuits is not limited to LSIs, and may be realized using a dedicated circuit or a general-purpose processor. Furthermore, it may be possible to use an FPGA (Field Programmable Gate Array) programmable after manufacturing LSIs or a reconfigurable processor in which connection and setting of a circuit cell inside an LSI can be reconfigured.

Furthermore, when a new technology for forming integrated circuits that replaces LSIs becomes available as a result of progress in semiconductor technology or semiconductor-derived technologies, functional blocks may be integrated using such technology. One possibility lies in adaptation of biotechnology.

(3) In the above embodiments, the Java™ language is used as the virtual machine programming language. Alternatively, other programming languages may also be used such as B-Shell used in the UNIX™ OS, Perl Script and ECMA Script.

(4) The present invention may be any combination of the above embodiments and modification examples.

### [Industrial Applicability]

The playback device relating to the present invention allows switching between a plurality of contents each including video data and an application stored on a storage medium. Accordingly, the playback device relating to the present invention has a possibly to be used in the movie industry and the consumer appliance industry involved in distribution of video contents to storage media.

### [Reference Signs List]

1: BD-ROM drive
2: reading control unit
3: demultiplexer
4: video decoder
5: video plane
6: audio decoder
7: image memory
8: image plane
9: image decoder
10: adder
11: static scenario memory
12: dynamic scenario memory
13: HDMV module
14: BD-J module
15: UO detection module
16: mode management module
17: dispatcher
18: rendering engine
19: writing control unit
20: AV playback library
21: network interface
22: local storage
23: OSD plane
24: OSD control module
25: OSD image memory
26: OSD image decoder
27: media management unit
28: recording unit
30: application
31: application manager
32: media playback module
33: media management module
34: file I/O module
35: network module
36: movie work switching management module
100: removable medium
101: BD-ROM disc
102: BD-ROM disc
103: BD-ROM disc
200: playback device
300: remote control
301: "movie work switching" key
400: TV

## Claims

1. An application execution device for executing an application on a storage medium, the plurality of domains each having stored thereon:
a plurality of applications;
a plurality of application management tables; and
an index table,
the application execution device reading an application from one of the plurality of domains and executing the read application,
the application execution device comprising:
a designation unit operable to designate one of the plurality of domains as a current domain;
a playback unit operable to, in the current domain, play back one of a plurality of titles with reference to an index table that shows a one-to-one correspondence between the plurality of application management tables and a plurality of playable titles and; and
an application manager operable to manage, in the current domain, operations of at least one application indicated by an application management table corresponding to a title that is played back as having a life cycle in the title, wherein
when the designation unit switches the current domain to another one of the plurality of domains as a new current domain, the playback unit starts playing back a first play title that is to be played back firstly among a plurality of titles stored on the new current domain, and the application manager terminates operations of a disc-unbound application that has been operating before the switching of the current domain and is indicated by an application management table corresponding to the first play title as not having a life cycle in the first play title.

2. The application execution device of Claim 1, wherein
the designation unit receives an instruction indicating one of the plurality of domains that is to be designated as the current domain, and performs the designation in accordance with the received instruction.

3. The application execution device of Claim 2, wherein
the designation unit receives the instruction via an operation performed by a user during playback of the title stored on the current domain.

4. The application execution device of Claim 3, wherein
the operation is performed on an input apparatus that is included in one of the program execution device and a remote controller attached thereto and issues a request for switching the current domain.

5. The application execution device of Claim 2, wherein
when a request for switching the current domain is issued by an application in execution that is indicated by the application management table corresponding to the title that is played back, the designation unit receives the instruction from a user.

6. The application execution device of Claim 5, further comprising
a display unit operable to display the plurality of domains,
when receiving an ID corresponding to one of the plurality of domains from the application in execution, the display unit highlights the domain corresponding to the received ID.

7. The application execution device of Claim 2, wherein
when a request for switching the current domain is issued by an application in execution that is indicated by the application management table corresponding to the title that is played back, the designation unit receives an ID corresponding to one of the plurality of domains from the application in execution, and designates the domain corresponding to the received ID as a new current domain.
